(19) **Europäisches Patentamt · European Patent Office · Office européen des brevets**

(11) **EP 2 786 183 B1**

(12) **FASCICULE DE BREVET EUROPEEN**

(45) Date de publication et mention
de la délivrance du brevet:
**24.06.2020 Bulletin 2020/26**

(21) Numéro de dépôt: **12799100.8**

(22) Date de dépôt: **23.11.2012**

(51) Int Cl.:
**G02B 5/28** (2006.01)    **C03C 17/36** (2006.01)

(86) Numéro de dépôt international:
**PCT/EP2012/073447**

(87) Numéro de publication internationale:
**WO 2013/079400 (06.06.2013 Gazette 2013/23)**

(54) **VITRAGE DE CONTRÔLE SOLAIRE**

**VERGLASUNG ALS SONNENSCHUTZ**

**SOLAR-CONTROL GLAZING UNIT**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2011 BE 201100696**

(43) Date de publication de la demande:
**08.10.2014 Bulletin 2014/41**

(73) Titulaire: **AGC Glass Europe**
**1348 Louvain-la-Neuve (BE)**

(72) Inventeur: **HEVESI, Kadosa**
**6041 Gosselies (BE)**

(74) Mandataire: **Agustsson, Sveinn Otto et al**
**AGC Glass Europe S.A.**
**Rue Louis Blériot, 12**
**6041 Gosselies (BE)**

(56) Documents cités:
**EP-A1- 0 645 352        WO-A1-2011/020974**
**WO-A1-2011/147864    WO-A1-2011/147875**
**WO-A1-2012/115850    US-A- 5 071 206**
**US-A1- 2007 081 227**

**Description**

**Domaine technique**

La présente invention se rapporte à un substrat transparent portant un empilage multicouche de contrôle solaire, ainsi qu'à un vitrage multiple incorporant au moins un tel substrat transparent portant un empilage multicouche de contrôle solaire.

Les empilages de contrôle solaire, aussi appelés empilages antisolaires, auxquels se rapporte la présente invention comprennent des couches fonctionnelles réfléchissant le rayonnement infrarouge, telle que des couches à base d'argent, auxquelles sont associés des revêtements diélectriques anti-réfléchissants qui servent à réduire la réflexion lumineuse et à contrôler d'autres propriétés de l'empilage telles que la couleur, mais qui servent également de revêtements d'accrochage et de protection pour les couches fonctionnelles. Les empilages de contrôle solaire contiennent couramment deux couches fonctionnelles entourées de couches diélectriques. Plus récemment, des empilages à trois couches fonctionnelles ont été proposés afin d'améliorer encore la protection solaire tout en conservant la plus grande transmission lumineuse possible. Chaque couche fonctionnelle est espacée d'au moins un revêtement diélectrique de telle sorte que chaque couche fonctionnelle soit entourée de revêtements diélectriques. Les différentes couches de l'empilage sont, par exemple, déposées par pulvérisation cathodique sous pression réduite assistée par champ magnétique, dans un dispositif bien connu de type magnétron. La présente invention n'est toutefois pas limitée à ce procédé particulier de dépôt de couche.

Ces empilages à contrôle solaire sont utilisés dans la réalisation de vitrages de protection solaire, ou vitrages antisolaires, afin de réduire le risque de surchauffe excessive, par exemple d'un espace clos ayant de grandes surfaces vitrées, dû à l'ensoleillement et ainsi réduire l'effort de climatisation à consentir en été. Le substrat transparent est alors souvent constitué d'une feuille de verre, mais il peut aussi par exemple être formé d'un film plastique tel que du PET (polyéthylène téréphtalate) qui est ensuite enfermé entre deux feuilles de verre à l'intervention d'un film polymère adhésif tel que du PVB (polyvinyle butyrale) ou l'éthylène acétate de vinyle EVA (Ethylene Vinyl Acetate) pour former un vitrage feuilleté, ou enfermé à l'intérieur d'un vitrage multiple.

Dans ce cas, le vitrage doit limiter le rayonnement solaire énergétique total, c'est-à-dire qu'il doit présenter un facteur solaire (FS ou g) relativement faible. Il doit cependant garantir un niveau de transmission lumineuse ($T_L$) le plus élevé possible de manière à procurer un niveau d'éclairement satisfaisant à l'intérieur du bâtiment. Ces exigences quelque peu conflictuelles traduisent la volonté d'obtenir un vitrage présentant une sélectivité (S) élevée, définie par le rapport de la transmission lumineuse au facteur solaire. Ces empilages à contrôle solaire présentent également une faible émissivité qui permet de réduire la déperdition de chaleur par rayonnement infrarouge de grande longueur d'onde. Ils améliorent ainsi l'isolation thermique des grandes surfaces vitrées et réduisent les déperditions d'énergie et les coûts de chauffage en période froide.

La transmission lumineuse ($T_L$) est le pourcentage du flux lumineux incident, de l'Illuminant D65, transmis par le vitrage dans le domaine visible. Le facteur solaire (FS ou g) est le pourcentage du rayonnement énergétique incident qui est d'une part directement transmis par le vitrage et d'autre part absorbé par celui-ci puis rayonné dans la direction opposée à la source d'énergie par rapport au vitrage.

Ces vitrages antisolaires sont en général assemblés en vitrages multiples tels que des vitrages doubles ou triples dans lesquels la feuille de verre portant l'empilage est associée à une ou plusieurs autre feuille de verre, pourvue ou non de revêtement, l'empilage à contrôle solaire multicouche se trouvant au contact de l'espace intérieur entre les feuilles de verre.

Dans certains cas, on est amené à effectuer une opération de renforcement mécanique du vitrage, telle qu'une trempe thermique de la ou des feuilles de verre, pour améliorer la résistance aux contraintes mécaniques. On peut aussi éventuellement être amené à donner une courbure plus ou moins complexe aux feuilles de verre pour des applications particulières, à l'aide d'une opération de bombage à température élevée. Dans les processus de fabrication et de mise en forme des vitrages, il y a certains avantages à effectuer ces opérations de traitement thermique sur le substrat déjà revêtu au lieu de revêtir un substrat déjà traité. Ces opérations sont réalisées à une température relativement élevée, température à laquelle la couche fonctionnelle à base de matériau réfléchissant l'infrarouge, par exemple à base d'argent, a tendance à se détériorer et à perdre ses propriétés optiques et ses propriétés vis-à-vis du rayonnement infrarouge. Ces traitements thermiques consistent notamment à chauffer la feuille vitreuse à une température supérieure à 560°C dans l'air, par exemple entre 560°C et 700°C, et notamment aux environs de 640°C à 670°C, pour une durée d'environ 6, 8, 10, 12 ou même 15 minutes selon le type de traitement et l'épaisseur de la feuille. Dans le cas d'un traitement de bombage, la feuille vitreuse peut alors être bombée selon la forme désirée. Le traitement de trempe consiste alors à refroidir brutalement la surface de la feuille vitreuse, plate ou bombée, par des jets d'air ou de fluide de refroidissement afin d'obtenir un renforcement mécanique de la feuille.

Dans le cas où la feuille de verre revêtue doit subir un traitement thermique, il faut donc prendre des précautions toutes particulières pour réaliser une structure d'empilage qui soit apte à subir un traitement thermique de trempe et/ou de bombage, parfois référencé ci-après par l'expression « trempable », sans perdre ses propriétés optiques et/ou énergétiques qui en font sa raison d'être. Il faut notamment utiliser des matériaux diélectriques, pour former les revêtements diélectriques, qui supportent les températures élevées du traitement thermique sans présenter de modification structurelle néfaste. Des exemples de matériaux particulièrement adéquats pour cette utilisation sont l'oxyde mixte zinc-étain, et notamment le stannate de zinc, le nitrure de silicium et le nitrure d'aluminium. Il faut également veiller à ce que les couches fonctionnelles, par exemple à base d'argent, ne soient pas oxydées en cours de traitement, par exemple en s'assurant qu'il y ait, au moment du traitement, des couches sacrificielles capables de s'oxyder à la place de l'argent en captant l'oxygène libre.

Il est également souhaitable que les vitrages répondent à certains critères esthétiques en termes de réflexion lumineuse (RL), c'est-à-dire le pourcentage du flux lumineux incident -de l'Illuminant D65- réfléchi par le vitrage dans le domaine visible, et de couleur en réflexion et en transmission. La demande du marché est un vitrage à réflexion lumineuse modérée, mais pas trop faible pour éviter l'effet « trou noir » lorsqu'on regarde une façade dans certaines conditions d'éclairage faible. La combinaison d'une haute sélectivité avec une réflexion lumineuse modérée conduit parfois à l'obtention de teintes pourpres en réflexion qui sont très peu esthétiques.

Les vitrages antisolaires sont aussi utilisés dans le domaine des vitrages automobiles, par exemple des pare-brise mais également des autres vitres du véhicule telles les vitres latérales, les vitres arrières ou le toit du véhicule. Dans ce domaine, les vitres sont souvent feuilletées, c'est-à-dire que le substrat portant l'empilage est associé à un autre substrat transparent, portant ou non un empilage, à l'intervention d'un film plastique adhésif généralement en PVB, l'empilage antisolaire était disposé à l'intérieur du feuilleté au contact du PVB. Les vitres de véhicule doivent généralement être bombées pour s'adapter à la forme du véhicule. Lorsque le substrat est une feuille de verre, l'opération de bombage est réalisée à température élevée et le substrat muni de son empilage est dès lors soumis à un traitement thermique similaire au traitement de trempe, avec refroidissement rapide ou non, décrit ci-dessus avec en plus une opération de mise en forme tant que le substrat est à haute température.

Pour réduire la quantité de chaleur qui pénètre dans le local ou le véhicule au travers du vitrage, on empêche le rayonnement calorifique infrarouge invisible de traverser le vitrage en le réfléchissant. C'est le rôle des couches fonctionnelles à base d'un matériau réfléchissant le rayonnement infrarouge. C'est un élément essentiel dans l'empilage à contrôle solaire.

Technique antérieure

Plusieurs solutions ont été proposées pour améliorer la protection solaire tout en conservant le maximum de transmission lumineuse, mais aucune solution ne fournit un vitrage vraiment satisfaisant qui associe tant des propriétés optiques et thermiques optimum qu'une stabilité de fabrication.

La demande de brevet WO 2009/029466 A1 au nom de PPG Industries décrit un vitrage feuilleté pour véhicule automobile dans lequel une feuille de verre porte un empilage à trois couches fonctionnelles à base d'argent. Les couches d'argent ont une épaisseur décroissante à partir de la feuille de verre qui les porte. Ce document décrit un empilage à transmission lumineuse élevée pouvant être utilisé pour former un pare-brise de véhicule automobile. Toutefois, la sélectivité de cet empilage est relativement faible.

La demande de brevet EP 645352 A1 déposée par Saint-Gobain Vitrage décrit un vitrage antisolaire dont l'empilage comporte trois couches d'argent à épaisseur croissante en partant du verre. Toutefois, selon les exemples 1 et 2 du document, soit la sélectivité est relativement faible, soit la teinte en réflexion est peu stable et fort sensible aux fluctuations des épaisseurs en cours de fabrication ou au manque d'uniformité transversale. En effet, pour obtenir un empilage qui soit industriellement acceptable, il ne suffit pas de fixer les épaisseurs des couches fonctionnelles, il faut aussi ajuster les épaisseurs des revêtements diélectriques. Les possibilités pour ce faire sont très nombreuses et le document EP 645352 A1 ne nous apprend pas comment faire pour obtenir les meilleurs résultats possibles.

La demande de brevet WO 2010/037968 A1 déposée par Saint-Gobain Vitrage tente de résoudre ce problème de stabilité de fabrication. C'est ainsi qu'il décrit un vitrage antisolaire ayant un empilage comportant au moins trois couches d'argent dont les épaisseurs géométriques présentent une symétrie centrale. Cette disposition est prise en vue d'améliorer la stabilité de fabrication uniquement en regard de mouvements parallèles des revêtements diélectriques (dans ce cas, les épaisseurs de tous les revêtements diélectriques augmentent ou diminuent ensemble de la même amplitude). Cependant, les variations d'épaisseurs peuvent avoir un effet cumulatif ou dé-cumulatif sur les fluctuations de teinte. Dans la pratique industrielle, les processus de dépôts des différents revêtements diélectriques sont indépendants les uns des autres, il faut donc s'assurer d'une bonne stabilité de teinte individuellement pour chaque variation d'épaisseur et qui plus est, en tenant compte également des variations d'épaisseur des couches fonctionnelles. En outre, cet empilage présente une moins bonne sélectivité. Or, la difficulté réside justement dans le maintien d'une bonne stabilité tout en maximisant la sélectivité. De plus, les exemples se rapportent à des couches comprenant quatre couches fonctionnelles.

Les demandes de brevet WO2012115850A1 et WO2011147864A1 font partie de l'état de la technique au titre de l'article 54(3) CBE et divulguent des empilements fonctionnels comprenant trois couches d'argent.

Résumé de l'invention

L'un des objets de l'invention est de fournir un substrat transparent portant un empilage multicouche de contrôle solaire qui assure une protection solaire efficace avec une sélectivité élevée, en comblant au mieux les lacunes de l'art antérieur.

Un autre objet de l'invention réside dans le fait d'obtenir un substrat revêtu qui présente un aspect plaisant, tant en transmission qu'en réflexion côté substrat, répondant à la demande commerciale, par exemple ayant notamment une teinte relativement neutre.

Un autre objet de l'invention est de permettre d'obtenir plus aisément un substrat revêtu qui présente une bonne stabilité angulaire de la teinte en réflexion, c'est-à-dire ayant une variation de teinte de très faible amplitude ou d'amplitude acceptable sans modification majeure de nuance de la teinte.

Un autre objet de l'invention est de fournir un substrat revêtu qui présente une faible variation de la teinte en réflexion observée côté substrat lorsqu'il y a une fluctuation des épaisseurs de couches pendant la durée de fabrication d'un lot de substrats revêtus ou un manque d'uniformité transversale suite à un taux de dépôt variable sur la longueur des cathodes.

Un autre objet de l'invention est de fournir un substrat revêtu pouvant être produit aisément en grande série à l'échelle industrielle à un prix de revient avantageux.

L'invention selon un premier mode telle que décrite dans la revendication 1 se rapporte à un substrat transparent portant un empilage multicouche de contrôle solaire comprenant trois couches fonctionnelles à base d'un matériau réfléchissant le rayonnement infrarouge et quatre revêtements diélectriques de telle sorte que chaque couche fonctionnelle soit entourée par des revêtements diélectriques, caractérisé en ce que l'épaisseur géométrique de la deuxième couche fonctionnelle en partant du substrat est comprise entre 13 et 15 nm et est supérieure à l'épaisseur géométrique de la première couche fonctionnelle et l'épaisseur géométrique de la troisième couche fonctionnelle est supérieure à l'épaisseur géométrique de la première couche fonctionnelle, en ce que le rapport de l'épaisseur optique du revêtement diélectrique transparent disposé entre la deuxième et la troisième couche fonctionnelle, en partant du substrat, sur l'épaisseur optique du revêtement diélectrique transparent final disposé au-delà de la dernière couche fonctionnelle est compris entre 2,0 et 3,0, et en ce que le rapport de l'épaisseur optique du revêtement diélectrique transparent disposé entre la deuxième et la troisième couche fonctionnelle sur l'épaisseur optique du revêtement diélectrique transparent disposé entre la première et la deuxième couche fonctionnelle est soit compris entre 0,6 et 0,9 et excluant d'une part un revêtement comprenant la succession suivante de couches en partant du substrat : une couche de nitrure de silicium dont l'épaisseur est comprise entre 8,4 et 14 nm ; une couche d'oxyde de zinc dont l'épaisseur est comprise entre 8,2 et 13,8 nm ; une première couche d'argent dont l'épaisseur est comprise entre 7,1 et 11,9 nm surmontée d'une couche barrière d'oxyde de nickel-chrome dont l'épaisseur est comprise entre 2,2 et 3,8 nm ; une couche d'oxyde de titane dont l'épaisseur est comprise entre 2,2 et 3,8 nm ; une couche d'oxyde de zinc-étain dont l'épaisseur est comprise entre 43,5 et 73 nm ; une couche d'oxyde de zinc dont l'épaisseur est comprise entre 12 et 20 nm ; une deuxième couche d'argent dont l'épaisseur est comprise entre 9,6 et 16 nm surmontée d'une couche barrière d'oxyde de nickel-chrome dont l'épaisseur est comprise entre 2,2 et 3,8 nm ; une couche de nitrure de silicium dont l'épaisseur est comprise entre 8,3 et 13,9 nm ; une couche d'oxyde d'étain dont l'épaisseur est comprise entre 27,7 et 46,3 nm ; une couche d'oxyde de zinc dont l'épaisseur est comprise entre 15 et 25 nm ; une troisième couche d'argent dont l'épaisseur est comprise entre 10 et 16,8 nm surmontée d'une couche barrière d'oxyde de nickel-chrome dont l'épaisseur est comprise entre 2,2 et 3,8 nm ; une couche d'oxyde d'étain dont l'épaisseur est comprise entre 11,2 et 18,8 nm ; une couche de nitrure de silicium dont l'épaisseur est comprise entre 12,8 et 21,4 nm et d'autre part un revêtement comprenant la succession suivante de couches en partant du substrat : un premier revêtement diélectrique formé d'une couche de stannate de zinc dont l'épaisseur est de 77,9 nm, une première couche d'argent dont l'épaisseur est 11,2 nm, une couche de titane dont l'épaisseur est 1 nm, une couche d'oxyde de titane dont l'épaisseur est 1,4 nm, un deuxième revêtement diélectrique composé de deux couches d'oxyde mixte de zinc étain dont l'épaisseur optique totale est 156,4 nm, la première couche d'oxyde mixte comprenant un rapport zinc/étain : 52/48 et le deuxième couche d'oxyde mixte du deuxième revêtement diélectrique ayant une épaisseur géométrique de 18,4 nm et comprenant un rapport zinc/étain : 90/10, une deuxième couche d'argent dont l'épaisseur est 14,3 nm, une couche de titane dont l'épaisseur est 0,8 nm, une couche d'oxyde de titane dont l'épaisseur est 1,4 nm, un troisième revêtement diélectrique composé de deux couches d'oxyde mixte de zinc étain dont l'épaisseur optique totale est 135,2 nm, la première couche d'oxyde mixte comprenant un rapport zinc/étain : 52/48 et le deuxième couche d'oxyde mixte du deuxième revêtement diélectrique ayant une épaisseur géométrique de 18,4 nm et comprenant un rapport zinc/étain : 90/10, une troisième couche d'argent dont l'épaisseur est 15,0 nm, une couche de titane dont l'épaisseur est 0,9 nm, une couche d'oxyde de titane dont l'épaisseur est 1,4 nm et un quatrième revêtement diélectrique composé de deux couches d'oxyde mixte de zinc étain dont l'épaisseur optique totale est 60,5 nm, la première couche d'oxyde mixte ayant une épaisseur géométrique de 9,2 nm et comprenant un rapport zinc/étain : 90/10 et le deuxième couche d'oxyde mixte du deuxième revêtement diélectrique comprenant un rapport zinc/étain : 52/48.

Dans le second mode et tel que décrit dans la revendication 2, le rapport de l'épaisseur optique du revêtement diélectrique transparent disposé entre la deuxième et la troisième couche fonctionnelle sur l'épaisseur optique du revêtement diélectrique transparent disposé entre la première et la deuxième couche fonctionnelle est compris entre 1,3 et 1,7.

De manière surprenante, le respect de cette combinaison de caractéristiques selon la revendication 1 permet d'atteindre plus aisément une grande stabilité des propriétés optiques du substrat revêtu en cours de fabrication industrielle en grande série. Les phénomènes interférentiels sont complexes et le grand nombre de couches du type d'empilage selon l'invention augmente la complexité. Les fluctuations d'épaisseur des couches en cours de production peuvent entraîner des modifications importantes dans les propriétés optiques du substrat revêtu. L'invention permet de minimiser plus aisément ces modifications néfastes à la qualité des produits fabriqués industriellement en grande série.

Dans la présente description, lorsque les gammes de valeurs données sont comprises entre deux bornes, les bornes sont implicitement incluses dans la gamme donnée. L'épaisseur optique est définie comme l'épaisseur géométrique (physique) de la couche considérée multipliée par son indice de réfraction. La variation de l'indice de réfraction des différents matériaux selon la longueur d'onde peut être sensiblement différente. Dans le cadre de la présente invention, l'épaisseur optique des diélectriques transparents sera calculée en utilisant la formule suivante :

$$\text{épaisseur optique} = d \text{ multiplié par } n_v,$$

dans laquelle $d$ est l'épaisseur géométrique (physique) de la couche considérée et $n_v$ est un indice de réfraction virtuel obtenu à l'aide de la formule suivante :

$$n_v = \left(0{,}6902 \times n(550)^2\right) - \left(0{,}165 \times n(550)\right) - 0{,}4643$$

dans laquelle $n(550)$ est l'indice de réfraction du matériau à la longueur d'onde de 550 nm.

Si un revêtement diélectrique transparent est composé de plusieurs couches, l'épaisseur optique totale du revêtement diélectrique transparent à considérer est la somme des épaisseurs optiques des différentes couches calculées comme indiqués ci-dessus.

Dans la présente description, sauf avis contraire, on a toujours utilisé, pour simplifier, un indice de réfraction de 2,03 qui correspond à des matériaux diélectriques tels que ZnO, du SnO2 ou du stannate de zinc ZnSnO4. Toutefois, il est bien entendu que d'autres matériaux diélectriques peuvent être utilisés. A titre d'exemple, voici l'indice de réfraction n(550), à la longueur d'onde de 550 nm, de quelques matériaux diélectriques parmi les plus utilisés : TiO2, n(550) = 2,5 ; Si3N4, n(550) = 2,04 ; Al2O3, n(550) = 1,8 ; AlN, n(550) = 1,9 .

Dans la présente description, sauf indication contraire, toutes les valeurs et gammes de valeurs des caractéristiques optiques et thermiques sont données pour un vitrage double constitué d'un verre sodo-calcique ordinaire de 6 mm portant l'empilage de couche, d'un espace intercalaire de 15 mm rempli d'Ar à raison de 90% et d'air à raison de 10% et d'un autre verre sodo-calcique, non-revêtu, d'une épaisseur de 4mm. La face revêtue du verre de 6 mm sera placée à l'intérieur du double vitrage. La réflexion observée du côté du verre de 6 mm sera désignée comme la réflexion « RV », c'est-à-dire la réflexion « côté verre » pour le verre revêtu, tandis que la réflexion observée du côté du verre de 4 mm sera désignée comme la réflexion « Rc », c'est-à-dire la réflexion « côté couche » pour le verre revêtu. Les teintes seront exprimées en L*a*b* selon le système CieLab pour l'illuminant D65, 10°. La transmission lumineuse (TL) du verre sodo-calcique ordinaire, sans empilage, est de 89% pour une feuille de 6 mm et de 90% pour une feuille de 4 mm.

Les revêtements diélectriques transparents sont bien connus dans le domaine des couches déposées par pulvérisation cathodique. Les matières adéquates sont nombreuses et il n'est pas utile d'en faire la liste complète ici. Ce sont en général des oxydes, oxy-nitrures ou nitrures métalliques. Parmi les plus courantes, on peut citer à titre d'exemple SiO2, TiO2, SnO2, ZnO, ZnAlOx, Si3N4, AlN, Al2O3, ZrO2, Nb2O5, YOx TiZrYOx, TiNbOx, HfOx, MgOx, TaOx, CrOx et Bi2O3, et leurs mélanges. On peut également citer les matériaux suivants : AZO, ZTO, GZO, NiCrOx, TXO, ZSO, TZO, TNO, TZSO, TZAO et TZAYO. L'expression « AZO » se rapporte à un oxyde de zinc dopé avec de l'aluminium ou à un oxyde mixte de zinc et d'aluminium, obtenu de préférence à partir d'une cathode céramique formée par l'oxyde à déposer, soit en atmosphère neutre ou légèrement oxydante. De même, les expressions ZTO ou GZO se rapportent respectivement à des oxydes mixtes de titane et de zinc ou de zinc et de gallium, obtenus à partir de cathodes céramiques, soit en atmosphère neutre ou légèrement oxydante. L'expression TXO se rapporte à de l'oxyde de titane obtenu à partir d'une cathode céramique d'oxyde de titane. L'expression ZSO se rapporte à un oxyde mixte zinc-étain obtenu soit à partir d'une cathode métallique de l'alliage déposé sous atmosphère oxydante ou à partir d'une cathode céramique de l'oxyde correspondant, soit en atmosphère neutre ou légèrement oxydante. Les expressions TZO, TNO, TZSO, TZAO ou TZAYO se rapportent respectivement à des oxydes mixtes titane-zirconium, titane-niobium, titane-zirconium-étain, titane-zirconium-aluminium ou titane-zirconium-aluminium-yttrium, obtenus à partir de cathodes céramiques, soit en atmosphère neutre ou légèrement oxydante. Tous ces matériaux cités ci-avant peuvent être utilisés pour former les revêtements diélectriques transparents utilisés dans la présente invention.

De préférence, dans les empilages correspondant à la revendication 1, le rapport de l'épaisseur optique du revêtement diélectrique transparent disposé entre la deuxième et la troisième couche fonctionnelle, en partant du substrat, sur l'épaisseur optique du revêtement diélectrique transparent final disposé au-delà de la dernière couche fonctionnelle est égal ou supérieur à 2,1, de préférence comprise entre 2,1 et 3,0, avantageusement entre 2,1 et 2,7, par exemple compris entre 2,15 et 2,7, et même favorablement compris entre 2,15 et 2,55.

La deuxième couche fonctionnelle en partant du substrat présente une épaisseur comprise entre 13 et 15nm, et l'épaisseur optique du premier diélectrique déposé sur le substrat est comprise entre 44 et 86 nm, avantageusement comprise entre 46 et 80 nm. Ces caractéristiques permettent d'obtenir des empilages ayant une teinte en réflexion, examinée côté substrat, particulièrement agréable, avec entre autres, des valeurs de a* comprises entre -1,5 et -4, ainsi que des valeurs de b* comprises entre -3 et -9.

De préférence, les trois couches fonctionnelles ont une épaisseur croissante à partir du substrat, c'est-à-dire que l'épaisseur de la troisième couche fonctionnelle, en comptant à partir du substrat, est aussi supérieure à l'épaisseur de la deuxième couche fonctionnelle. Avantageusement, chacune des deuxième et troisième couches fonctionnelles est au moins 5% plus épaisse que celle qui la précède.

De préférence, selon un premier mode de réalisation de l'invention, le rapport de l'épaisseur optique du revêtement diélectrique transparent disposé entre la deuxième et la troisième couche fonctionnelle sur l'épaisseur optique du revêtement diélectrique transparent disposé entre la première et la deuxième couche fonctionnelle est égal ou inférieur à 0,9, de préférence compris entre 0,65 et 0,9, et avantageusement compris entre 0,7 et 0,85.

Les empilages obtenus selon le premier mode de réalisation de l'invention s'avèrent plus stables en terme de teinte examiné en réflexion côté empilage. Ainsi, on obtient aisément une stabilité de teinte en fabrication, exprimée par la valeur Deltacol dont la formule est donnée ci-après, examinée côté empilage, de 1,8 à 2,5 pour une sélectivité de 1,95 à 2,02. Ces empilages présentent de plus une excellente combinaison esthétique avec une bonne stabilité angulaire et une valeur avantageuse de stabilité de teinte en fabrication, exprimée par la valeur Deltacol, examinée en réflexion côté substrat, par exemple inférieure à 2.1, voire inférieure à 1.9 et même inférieure à 1.8.

La stabilité de la teinte dans une fabrication en série à grande échelle est un élément important pour garantir la fabrication d'un produit de qualité constante. A des fins de comparaison, la variation de la teinte en réflexion suite à une fluctuation des épaisseurs des couches a été quantifiée à l'aide d'une formule mathématique. L'index de variation de teinte en fabrication a été appelé « Deltacol » et a été défini par la relation suivante :

$$Deltacol = 0,5x\left( \sqrt{\frac{\Delta a*}{1,2}} + \sqrt{\frac{\Delta b*}{2,4}} \right)$$

dans laquelle $\Delta a*$ et $\Delta b*$ sont les différences entre les valeurs les plus élevées et les valeurs les plus faibles respectivement de a* et de b* trouvées lorsque les épaisseurs de chaque couche fonctionnelle et de chaque revêtement diélectrique de l'empilage varie individuellement de plus ou de moins 2,5%. Les valeurs a* et b* sont les valeurs CIELAB 1976 L*a*b* mesurées sous l'Illuminant D65/10°.

De préférence, selon le premier mode de réalisation de l'invention, l'épaisseur géométrique de la première couche fonctionnelle en partant du substrat est comprise entre 9 et 14 nm, de préférence entre 10 et 13 nm, et avantageusement comprise entre 11 et 13 nm.

De préférence, selon le premier mode de réalisation de l'invention, l'épaisseur géométrique de la dernière couche fonctionnelle en partant du substrat est comprise entre 11,5 et 17 nm, de préférence entre 13 et 16 nm.

De préférence, selon le premier mode de réalisation de l'invention, l'épaisseur optique du second revêtement diélectrique transparent, disposé entre la première et la deuxième couche fonctionnelle, est comprise entre 138 et 170 nm, de préférence comprise entre 140 et 165 nm, et avantageusement comprise entre 148 et 160 nm.

De préférence, selon le premier mode de réalisation de l'invention, l'épaisseur optique du troisième revêtement diélectrique transparent, disposé entre la deuxième et la troisième couche fonctionnelle, est comprise entre 101 et 155 nm, de préférence comprise entre 107 et 147 nm, et avantageusement comprise entre 117 et 147 nm.

De préférence, selon le premier mode de réalisation de l'invention, l'épaisseur optique du revêtement diélectrique transparent final, disposé au-delà de la dernière couche fonctionnelle, est comprise entre 40 et 76 nm, de préférence comprise entre 44 et 71 nm, et avantageusement comprise entre 50 et 70 nm.

De préférence, selon le premier mode de réalisation de l'invention, le rapport de l'épaisseur optique du premier revêtement diélectrique transparent, disposé entre le substrat et la première couche fonctionnelle en partant du substrat, sur l'épaisseur optique du revêtement diélectrique transparent final, disposé au-delà de la dernière couche fonctionnelle, est compris entre 0,5 et 1,7, de préférence entre 0,6 et 1,6, et avantageusement compris entre 0,9 et 1,5.

De préférence, selon le premier mode de réalisation de l'invention, le rapport de l'épaisseur géométrique de la troisième couche fonctionnelle sur l'épaisseur géométrique de la seconde couche fonctionnelle en partant du substrat est compris entre 0,9 et 1,35, de préférence entre 1,0 et 1,2, et avantageusement compris entre 1,1 et 1,2.

De préférence, selon le premier mode de réalisation de l'invention, le rapport de l'épaisseur optique du second revêtement diélectrique transparent, disposé entre la première et la deuxième couche fonctionnelle, sur l'épaisseur optique du premier revêtement diélectrique transparent, disposé entre le substrat et la première couche fonctionnelle en partant du substrat, est compris entre 1,6 et 3,8, de préférence entre 1,8 et 3,5, et avantageusement entre 2,0 et 3,0.

Avantageusement, toutes ces caractéristiques selon le premier mode de réalisation sont combinées pour obtenir le meilleur résultat possible.

Le respect de ces caractéristiques selon le premier mode de réalisation de l'invention permet d'obtenir aisément des empilages qui, en outre, présentent des teintes en transmission particulièrement neutre, avec des valeurs de b* <3, de préférence <2 et même <1.

De préférence, selon un second mode de réalisation de l'invention, le rapport de l'épaisseur optique du revêtement diélectrique transparent disposé entre la deuxième et la troisième couche fonctionnelle, en partant du substrat, sur l'épaisseur optique du revêtement diélectrique transparent final disposé au-delà de la dernière couche fonctionnelle est égal ou supérieur à 2,4. Dans le cas de couches trempables, il est avantageux que ce rapport soit compris entre 2,4 et 2,7, et il est de plus avantageux dans ce cas, en combinaison avec cette dernière caractéristique, que le rapport de l'épaisseur optique du revêtement diélectrique transparent disposé entre la deuxième et la troisième couche fonctionnelle sur l'épaisseur optique du revêtement diélectrique transparent disposé entre la première et la deuxième couche fonctionnelle soit aussi égal ou supérieur à 1,3.

Les empilages obtenus selon le second mode de réalisation de l'invention présentent une meilleure sélectivité. La sélectivité pourra être supérieure à 2,02, voire 2,05. Ces empilages présentent de plus une excellente combinaison esthétique avec une bonne stabilité angulaire et une valeur avantageuse de stabilité de teinte en fabrication, exprimée par la valeur Deltacol, examinée en réflexion côté verre, par exemple une valeur de Deltacol inférieure à 2,1, voire inférieure à 1,9 et même inférieure à 1,8.

De préférence, selon le second mode de réalisation de l'invention, l'épaisseur géométrique de la première couche fonctionnelle en partant du substrat est comprise entre 8 et 12 nm, avantageusement comprise entre 9 et 11 nm, et favorablement comprise entre 10 et 11 nm.

Selon le second mode de réalisation de l'invention, l'épaisseur géométrique de la dernière couche fonctionnelle en partant du substrat est comprise entre 16 et 20 nm, avantageusement comprise entre 17 et 19 nm, et favorablement comprise entre 18 et 19 nm.

De préférence, selon le second mode de réalisation de l'invention, l'épaisseur optique du second revêtement diélectrique transparent, disposé entre la première et la deuxième couche fonctionnelle, est comprise entre 105 et 150 nm, avantageusement comprise entre 115 et 136 nm, et favorablement comprise entre 119 et 132 nm.

De préférence, selon le second mode de réalisation de l'invention, l'épaisseur optique du troisième revêtement diélectrique transparent, disposé entre la deuxième et la troisième couche fonctionnelle, est comprise entre 152 et 175 nm, et avantageusement comprise entre 156 et 175 nm.

De préférence, selon le second mode de réalisation de l'invention, l'épaisseur optique du revêtement diélectrique transparent final, disposé au-delà de la dernière couche fonctionnelle, est comprise entre 58 et 82 nm, et avantageusement comprise entre 67 et 80 nm.

De préférence, selon le second mode de réalisation de l'invention, le rapport de l'épaisseur optique du premier revêtement diélectrique transparent, disposé entre le substrat et la première couche fonctionnelle en partant du substrat, sur l'épaisseur optique du revêtement diélectrique transparent final, disposé au-delà de la dernière couche fonctionnelle, est compris entre 0,5 et 1,2, et avantageusement compris entre 0,6 et 1,1.

De préférence, selon le second mode de réalisation de l'invention, le rapport de l'épaisseur géométrique de la troisième couche fonctionnelle sur l'épaisseur géométrique de la seconde couche fonctionnelle en partant du substrat est compris entre 1,1 et 1,8, et avantageusement compris entre 1,2 et 1,6.

De préférence, selon le second mode de réalisation de l'invention, le rapport de l'épaisseur optique du second revêtement diélectrique transparent, disposé entre la première et la deuxième couche fonctionnelle, sur l'épaisseur optique du premier revêtement diélectrique transparent, disposé entre le substrat et la première couche fonctionnelle en partant du substrat, est compris entre 1,5 et 2,6, et avantageusement compris entre 1,7 et 2,4.

De préférence, le substrat est une feuille de verre sodo-calcique ordinaire clair ou teinté dans la masse. C'est le substrat le mieux adapté pour servir de base à un vitrage à contrôle solaire et il peut subir un traitement thermique à température élevée, tel qu'un traitement thermique de trempe ou de bombage. Avantageusement, le substrat est une feuille de verre extra-clair ayant une transmission lumineuse supérieure à 90%, voire supérieure ou égale à 91%, et même supérieure ou égale à 92%. Un substrat particulièrement préféré est le verre vendu sous la marque CLEARVISION® par la société AGC Glass Europe.

Un mode de réalisation de l'invention comprend un substrat transparent portant un empilage multicouche dont le facteur solaire est très faible. Une partie importante du rayonnement calorifique est également transmise par le rayonnement visible. Pour réduire la transmission de cette partie du rayonnement calorifique et aller au-delà de l'élimination de l'apport d'énergie par le rayonnement infrarouge, on est obligé d'abaisser le niveau de la transmission lumineuse. Dans ce cas, on introduit volontairement de l'absorption lumineuse dans l'empilage afin de réduire la transmission lumineuse. Ceci est obtenu par l'insertion quelque part à l'intérieur de l'empilage d'une couche de matière absorbante qui peut être par exemple formée d'un métal, d'un oxyde ou sous-oxyde métallique absorbant, ou d'un nitrure, sous-nitrure ou oxy-nitrure métallique absorbant. On peut aussi simplement augmenter l'épaisseur d'une couche métallique de protection d'une ou de plusieurs des couches fonctionnelles. La transmission lumineuse est alors avantageusement inférieure ou égale à 57% en vitrage double comme expliqué ci-dessus.

Dans ce mode de réalisation de l'invention, il faut toutefois exclure le cas particulier où l'empilage comprend au moins deux couches à caractère métallique absorbantes dans le rayonnement visible, particulièrement à base de titane, situées à l'intérieur de l'empilage, chacune au-dessus d'une couche fonctionnelle et en contact avec celle-ci, qui conduit à une transmission lumineuse en vitrage double, et après traitement thermique éventuel, inférieure à 50%. Dans ce cas, les couches à caractère métallique absorbantes dans le rayonnement visible, disposées sur les couches fonctionnelles, présentent une épaisseur totale de métal absorbant supérieure à 1,3 nm analysée dans le produit final, après traitement thermique éventuel. Ce cas particulier fait l'objet de la demande de brevet internationale déposée le 25 mai 2011 sous le numéro PCT/EP2011/058540 au nom de la demanderesse et n'est pas inclus dans la portée de la présente invention. Les empilages selon la présente invention permettent d'obtenir toutes les propriétés désirées décrites précédemment sans présence de couche métallique absorbante dans leur état final prêt à l'emploi (c'est-à-dire après traitement thermique éventuel).

De préférence, la transmission lumineuse TL de l'empilage selon l'invention, lorsqu'il est monté en vitrage double comme indiqué ci-avant, et après traitement thermique éventuel, est supérieure à 51%, avantageusement supérieure à 54% et de préférence supérieure ou égale à 57%. La transmission lumineuse du vitrage double incluant un empilage selon l'invention est par exemple supérieure à 58%, 59% ou 60%. Pour des empilages trempables/bombables nous avons obtenu des valeurs de transmission lumineuse, après traitement thermique, supérieures à 64% et même supérieures à 66%.

L'invention s'étend à un vitrage multiple comprenant au moins un substrat portant un empilage multicouche de contrôle solaire tel que décrit ci-dessus.

De préférence, la transmission lumineuse TL du vitrage double, tel que défini ci-avant, est supérieure à 51%, avantageusement supérieure à 55% et favorablement supérieure ou égale à 60%.

De préférence, le facteur solaire du vitrage double est égal ou inférieur à 34%, de préférence égal ou inférieur à 32%, et avantageusement égal ou inférieur à 30,5%.

De préférence, la sélectivité du vitrage double est supérieure à 1,95, avantageusement égale ou supérieure à 2, et favorablement égale ou supérieure à 2,05.

L'invention s'étend aussi à un vitrage feuilleté comprenant au moins un substrat transparent tel que décrit ci-dessus assemblé à une feuille de matière vitreuse à l'intervention d'une matière plastique adhésive. Un tel vitrage est avantageusement utilisé comme vitrage d'un véhicule automobile, par exemple en tant que pare-brise.

L'invention s'étend aussi à un vitrage trempé portant un empilage antisolaire tel que décrit ci-dessus et ayant subi un traitement thermique de trempe et/ou de bombage à température élevée supérieure à 560°C.

L'invention sera maintenant décrite plus en détail, de manière non limitative, à l'aide des exemples de réalisations préférées ci-après.

Description des modes de réalisation.

Exemples 1 à 13.

Les exemples 1 à 13 sont réalisés de la même manière et les structures sont semblables, voire identique (exemples 1 à 10), seules les épaisseurs changent, comme indiqué dans le tableau 1. Les exemples 1-4 et 7-10 décrivent des substrats transparents non couverts par la présente invention.

Une feuille de verre float clair sodo-calcique ordinaire de 3,2 m sur 1 m et de 6 mm d'épaisseur est placée dans un dispositif de pulvérisation cathodique, assisté d'un champ magnétique, à pression réduite (environ 0,3 Pa) du type magnétron. Sur cette feuille de verre, on dépose un empilage multicouche de contrôle solaire qui comprend, en séquence :

Un premier revêtement diélectrique est déposé sur la feuille de verre. Ce premier revêtement est formé de deux couches d'oxyde métallique déposé dans une atmosphère réactive constituée d'un mélange d'argon et d'oxygène, à partir de cathodes métalliques. Le premier oxyde métallique est un oxyde mixte zinc-étain formé à partir d'une cathode d'un alliage zinc-étain à 52% en poids de zinc et 48% en poids d'étain pour former la structure spinelle de stannate de zinc Zn2SnO4. Le second oxyde métallique est un oxyde de zinc ZnO d'environ 9,2 nm d'épaisseur géométrique, déposé à partir d'une cible de zinc. L'épaisseur de la première couche d'oxyde mixte de zinc-étain est le complément par rapport à l'épaisseur de la seconde couche ZnO pour atteindre l'épaisseur géométrique du premier revêtement diélectrique D1 indiquée dans le tableau 1 ci-dessous.

Une couche fonctionnelle IR1 réfléchissant l'infrarouge formée d'argent à partir d'une cible d'argent pratiquement pur dans une atmosphère neutre, par exemple d'argon, est ensuite déposée sur le premier revêtement diélectrique D1. L'épaisseur géométrique de cette couche IR1 est donnée dans le tableau 1.

Une couche de protection de 1,4 nm en métal sacrificiel Ti est déposée à partir d'une cible de titane en atmosphère neutre directement sur la couche d'argent en ayant une interface commune avec elle. L'atmosphère oxydante du plasma lors du dépôt de la couche suivante, décrit ci-après, va oxyder cette couche sacrificielle de titane. Pour un empilage destiné à subir un traitement de trempe, de bombage et/ou de durcissement (qui est un traitement de trempe dans lequel le refroidissement rapide est moins prononcé), on déposerait dans les mêmes conditions 2,4 à 3,2 nm de titane. L'épaisseur de la couche de protection transformée en oxyde qui dépasse 2,5 nm (valeur correspondante en oxyde aux 1,4 nm d'épaisseur géométrique de Ti de la couche de protection telle que déposée dans le cas d'un empilage non trempable) devrait être additionnée à l'épaisseur du revêtement diélectrique qui suit pour le calcul des rapports selon l'invention.

De la même manière, les couches suivantes sont ensuite déposées sur la couche de protection :
Un second revêtement diélectrique D2, une deuxième couche fonctionnelle IR2, une couche sacrificielle de Ti de 1,4 nm, un troisième revêtement diélectrique D3, une troisième couche fonctionnelle IR3, une couche sacrificielle de Ti de 1,4 nm, suivi d'un quatrième et dernier revêtement diélectrique D4.

Les seconde et troisième couches fonctionnelles réfléchissant l'infrarouge, IR2 et IR3, sont formées d'argent à partir d'une cible d'argent pratiquement pur pulvérisée dans une atmosphère neutre d'argon, de la même manière que la couche IR1.

Les second et troisième revêtements diélectriques, respectivement D2 et D3, sont formés chacun respectivement de trois couches d'oxyde métallique. Le premier oxyde métallique est un oxyde de zinc obtenu à partir d'une cathode céramique d'oxyde de zinc dopé à 2% en poids d'aluminium déposé en atmosphère légèrement oxydante pour obtenir une épaisseur de 20 nm de ZnAlOx. Le second oxyde métalliques est un oxyde mixte zinc-étain formé à partir d'une cathode d'un alliage zinc-étain à 52% en poids de zinc et 48% en poids d'étain déposé dans une atmosphère réactive constituée d'un mélange d'argon et d'oxygène pour former la structure spinelle de stannate de zinc Zn2SnO4. La troisième couche d'oxyde métallique de chacun des deux revêtements D2 et D3 est une couche ZnO de 20 nm obtenue de la même manière que la couche ZnO du premier revêtement diélectrique décrit ci-dessus. L'épaisseur de la couche d'oxydes mixtes de zinc-étain de chacun de ces deux revêtements D2 et D3 est le complément par rapport à l'épaisseur des première et troisième couches d'oxyde métallique de chacun de ces deux revêtements pour atteindre l'épaisseur géométrique des deuxième et troisième revêtements diélectriques D2 et D3 indiquées dans le tableau 1 ci-dessous.

Le quatrième revêtement diélectrique D4 est formé de deux couches d'oxyde métallique. Le premier oxyde métallique est un oxyde de zinc obtenu à partir d'une cathode céramique d'oxyde de zinc dopé à 2% en poids d'aluminium déposé en atmosphère légèrement oxydante pour obtenir une épaisseur de 13 nm de ZnAlOx. Le second oxyde métallique est un oxyde mixte de zinc-étain déposé dans une atmosphère réactive constituée d'un mélange d'argon et d'oxygène à partir d'une cathode d'alliage zinc-étain à 52% en poids de zinc et 48% en poids d'étain pour former la structure spinelle de stannate de zinc Zn2SnO4. L'épaisseur de cette seconde couche d'oxyde mixte de zinc-étain est le complément par rapport à l'épaisseur de la première couche ZnAlOx pour atteindre l'épaisseur géométrique du quatrième revêtement diélectrique D4 indiquée dans le tableau 1 ci-dessous. Sur ce quatrième revêtement diélectrique, on a peut optionnellement déposer une couche finale de protection de 2 nm de TiO2 obtenue à partir d'une cathode de titane dans une atmosphère oxydante formée d'un mélange d'argon et d'oxygène. Dans ce cas, il faut prendre en compte l'épaisseur optique de cette fine couche pour le calcul de l'épaisseur optique globale du quatrième revêtement diélectrique.

Dans le tableau 1, toutes les épaisseurs indiquées sont des épaisseurs géométriques (physiques). Il suffit de multiplier l'épaisseur indiquée par l'indice de réfraction du matériaux utilisé pour obtenir l'épaisseur optique. On a aussi indiqué les valeurs des différents rapports d'épaisseurs des revêtements diélectriques et couches fonctionnelles discutés ci-avant. Ces rapports sont calculés sans tenir compte de l'épaisseur des couches de métal sacrificiel de protection, chacune de 1,4 nm de Ti.

Cette feuille de verre revêtue est ensuite assemblée en double vitrage avec une autre feuille de verre clair de 4 mm, le revêtement étant disposé du côté de l'espace intérieur du double vitrage. L'espace entre les deux feuilles est de 15 mm et l'air y est remplacé à 90% par de l'argon. En observant le double vitrage côté verre du substrat revêtu, l'empilage étant placé en position 2, c'est-à-dire qu'on voit d'abord le vitrage pourvu de l'empilage observé côté verre, puis la feuille de verre clair sans couche, on note les propriétés optiques et thermiques indiquées dans le tableau 2.

Dans la présente invention, les conventions suivantes sont utilisées pour les valeurs mesurées ou calculées. La transmission lumineuse (TL) et la réflexion lumineuse (RL) sont mesurées avec l'Illuminant D65/2°. En ce qui concerne la teinte en réflexion et la teinte en transmission, les valeurs CIELAB 1976 (L*a*b*) sont mesurées avec l'Illuminant D65/10°. Le facteur solaire (FS ou g) est calculé selon la norme EN410.

Dans le tableau 2, les valeurs de sélectivité (S) et de Deltacol (DC) sont également indiquées, ainsi que les valeurs des variations de a* et b* en réflexion côté substrat lors d'une variation de l'angle d'observation entre 0 et 55°, appelées respectivement «Shift a*» et «Shift b*». «DC (RV)» signifie que l'indice de variation (Deltacol) est obtenu en réflexion côté substrat, tandis que « DC (RC) » signifie que l'indice de variation (Deltacol) est obtenu côté empilage. Pour les valeurs de teintes, « TL » signifie que la valeur est mesurée en transmission, « RC » signifie que la valeur est mesurée en réflexion côté empilage (couche) et « RV » signifie que la valeur est mesurée en réflexion côté substrat (verre). L'indice de réfraction n(550), à la longueur d'onde de 550 nm, des matériaux diélectriques stannate de zinc, ZnO et ZnAlOx est de 2,03.

On constate que les teintes en réflexion obtenues sont agréables et correspondent à la demande commerciale. Le niveau de réflexion côté substrat n'est pas trop faible, ce qui évite le « trou noir » tout en évitant l'effet miroir. Les variations angulaires de teinte sont faibles et tout à fait acceptables, et la stabilité de fabrication est particulièrement bonne.

Les exemples 11-13 représentent des empilages trempables. L'épaisseur des trois couches de protection des couches d'argent, en métal sacrificiel, a été augmentée à 2,6 nm. Dans ce cas, on peut déposer une couche finale optionnelle de protection de 4 nm de TiN qui se transforme en TiO2 après traitement thermique. Si elle est utilisée, le rôle optique de cette couche finale de protection est prise en compte pour le produit fini en intégrant son épaisseur optique, calculée comme indiqué ci-dessus, dans l'épaisseur totale du dernier revêtement diélectrique. Les propriétés données dans le tableau 2 sont les propriétés en vitrage double, l'empilage ayant été trempé (chauffage à 650 °C pendant 8 min., suivi d'un refroidissement brutal par soufflage d'air froid).

En variante, on a utilisé une des successions suivantes de couches pour D1, D2 et/ou D3: TiO2/ZnO:Al ou TZO/TiO2/ZnO ou SnO2/ZnO/SnO2/ZnO ou ZnO:Al/ZnSnO4/ZnO, une des successions suivantes pour D1 : Si3N4/ZnO ou AlN/ZnO, et une des successions suivantes pour D4 : ZnO/SnO2 ou ZnO/TZO ou ZnO:Al/ZnSnO4 ou ZnO/SnO2/Si3N4 ou ZnO/SnO2/AlN, avec optionnellement une couche de protection externe. A chaque fois, les épaisseurs géométriques des différents constituants ont été adaptées en fonction de leur indice de réfraction pour obtenir l'épaisseur optique du revêtement diélectrique correspondant à l'épaisseur géométrique indiquée dans le tableau 1 multiplié par l'indice 2,03. L'indice de réfraction n(550), à la longueur d'onde de 550 nm, des matériaux diélectriques utilisés sont les suivants : pour TiO2, n(550) = 2,5 ; pour Si3N4, n(550) = 2,04 ; pour Al2O3, n(550) = 1,8; pour AlN, n(550) = 1,9; et pour TZO, n(550) = 2,26. L'épaisseur optique doit être calculée en utilisant l'indice de réfraction virtuel selon la formule donnée ci-dessus. On a obtenu les mêmes propriétés.

En variante, les couches de protection déposées directement sur les couches d'argent IR1, IR2 et/ou IR3 sont de fines couches de 2 nm de TiOx ou de ZnOx éventuellement dopé à l'aluminium, déposées en atmosphère contenant un gaz oxydant ou un gaz pouvant générer de l'oxygène, tel que du CO2, à partir de cathodes céramiques respectivement d'oxyde de titane ou de zinc, éventuellement dopés. Lorsque les trois couches de protection sont ainsi formées par du TiOx déposé à partir d'une cathode céramique, le gain en transmission lumineuse TL peut atteindre 6 à 8% en feuille monolithique par rapport à une couche de protection formée d'un métal sacrificiel Ti oxydé par le processus de dépôt en atmosphère oxydante du revêtement diélectrique suivant. Lorsque les trois couches de protection sont ainsi formées par du ZnO:Al (2% en poids d'aluminium) déposé à partir d'une cathode céramique, le gain en transmission lumineuse TL est de 3% en feuille monolithique par rapport à une couche de protection formée d'un métal sacrificiel Ti oxydé par le processus de dépôt en atmosphère oxydante du revêtement diélectrique suivant.

Selon d'autres variantes encore, on a remplacé dans le revêtement diélectrique transparent D4 la séquence d'oxydes métalliques décrites ci-dessus par la séquence ZnO:Al/TiO2 ou TZO, par la séquence ZnO:Al/SnO2/TiO2 ou TZO, ou encore par la séquence ZnO:Al/ZnSnO4/TZO.

Exemples comparatifs 1 et 2.

Les exemples comparatifs 1 (C1) et 2(C2), repris dans les tableaux 1 et 2, montrent des empilages hors invention par le fait que la combinaison des rapports d'épaisseur de revêtements diélectriques requis par l'invention n'est pas respectée. En ce qui concerne leur structure, il sont toutefois réalisés comme les exemples selon l'invention, l'exemple C1 est selon la formulation des empilages non-trempables tandis que l'exemple C2 suit la formulation des empilages trempables. Les différentes épaisseurs sont données dans le tableau 1 de la même manière que pour les exemples selon l'invention.

On constate notamment pour l'exemple C1, que la sélectivité est nettement plus faible que pour les exemples selon l'invention. L'invention permet d'optimiser la sélectivité tout en conservant une esthétique agréable et une très bonne stabilité de teinte.

L'exemple comparatif C2 s'inspire de l'enseignement du document EP645352, précédemment cité. On obtient une haute sélectivité et une esthétique agréable, mais ceci au dépend de la stabilité de la teinte dans une fabrication en série : la valeur DC(Rv) est plus de 20% supérieure aux valeurs obtenues selon l'invention.

**Tableau 1**

| Ex | D1 (Å) | IR1 (Å) | D2 (Å) | IR2 (Å) | D3 (Å) | IR3 (Å) | D4 (Å) | D1/D4 | D3/D2 | D3/D4 | IR3/IR2 | D2/D1 |
|---|---|---|---|---|---|---|---|---|---|---|---|---|
| 1 | 403 | 118 | 791 | 120 | 504 | 125 | 223 | 1,81 | 0,64 | 2,26 | 1,04 | 1,96 |
| 2 | 262 | 114 | 762 | 125 | 556 | 136 | 246 | 1,07 | 0,73 | 2,26 | 1,09 | 2,91 |
| 3 | 298 | 122 | 803 | 128 | 539 | 132 | 252 | 1,18 | 0,67 | 2,14 | 1,03 | 2,69 |
| 4 | 359 | 120 | 773 | 124 | 553 | 139 | 250 | 1,44 | 0,72 | 2,21 | 1,12 | 2,15 |
| 5 | 258 | 112 | 751 | 133 | 637 | 153 | 299 | 0,86 | 0,85 | 2,13 | 1,15 | 2,91 |
| 6 | 339 | 123 | 768 | 136 | 665 | 156 | 310 | 1,09 | 0,87 | 2,15 | 1,15 | 2,27 |
| 7 | 253 | 86 | 599 | 127 | 782 | 191 | 356 | 0,71 | 1,31 | 2,20 | 1,50 | 2,37 |
| 8 | 297 | 91 | 609 | 126 | 794 | 193 | 353 | 0,84 | 1,30 | 2,25 | 1,53 | 2,05 |
| 9 | 365 | 110 | 686 | 139 | 794 | 186 | 374 | 0,98 | 1,16 | 2,12 | 1,34 | 1,88 |
| 10 | 245 | 93 | 580 | 136 | 805 | 177 | 368 | 0,67 | 1,39 | 2,19 | 1,30 | 2,37 |
| 11 | 309 | 106 | 608 | 140 | 799 | 189 | 315 | 0,98 | 1,31 | 2,54 | 1,35 | 1,97 |
| 12 | 295 | 128 | 794 | 137 | 583 | 146 | 235 | 1,26 | 0,73 | 2,48 | 1,07 | 2,69 |
| 13 | 425 | 131 | 782 | 140 | 656 | 162 | 280 | 1,52 | 0,84 | 2,34 | 1,16 | 1,84 |
| C1 | 364 | 104 | 811 | 122 | 528 | 150 | 322 | 1,13 | 0,65 | 1,64 | 1,23 | 2,23 |
| C2 | 300 | 115 | 726 | 142 | 693 | 151 | 296 | 1,01 | 0,95 | 2,34 | 1,06 | 2,42 |

**Tableau 2**

| Ex | S | g % | $T_L$ % | a* $T_L$ | b*$T_L$ | L* $R_V$ | a* $R_V$ | b* $R_V$ | Shift a* | Shift b* | DC ($R_V$) | DC ($R_C$) |
|---|---|---|---|---|---|---|---|---|---|---|---|---|
| 1 | 1,98 | 29,7 | 58,8 | -6,6 | 0,9 | 43,4 | -0,9 | -5,7 | -0,5 | 3,4 | 1,8 | 2,3 |
| 2 | 1,97 | 29,6 | 58,3 | -6,0 | 0,2 | 44,1 | -3,7 | -5,7 | -0,2 | 4,1 | 1,9 | 2,7 |
| 3 | 1,98 | 29,0 | 57,4 | -5,6 | 1,9 | 46,7 | -4,7 | -8,4 | -1,6 | 4,3 | 1,8 | 2,5 |
| 4 | 2,00 | 29,3 | 58,7 | -6,5 | 0,0 | 43,0 | -2,4 | -4,5 | 0,2 | 3,6 | 2,1 | 2,7 |
| 5 | 2,00 | 30,1 | 60,2 | -6,1 | -0,1 | 41,5 | -3,4 | -4,8 | 0,8 | 4,4 | 1,9 | 2,3 |
| 6 | 2,01 | 30,5 | 61,2 | -5,9 | 0,0 | 40,2 | -3,0 | -3,9 | -1,3 | 4,8 | 1,7 | 2,4 |
| 7 | 2,06 | 29,8 | 61,4 | -6,2 | 2,9 | 40,5 | -2,6 | -6,8 | -0,9 | 2,4 | 1,6 | 5,9 |
| 8 | 2,04 | 29,8 | 60,8 | -5,4 | 3,4 | 41,9 | -4,2 | -7,4 | -1,8 | 2,3 | 1,7 | 5,8 |
| 9 | 2,06 | 30,0 | 61,9 | -5,4 | 1,5 | 40,0 | -3,1 | -4,0 | -3,1 | 3,4 | 1,9 | 3,0 |
| 10 | 2,06 | 29,7 | 61,3 | -5,8 | 3,2 | 41,7 | -1,1 | -5,6 | -2,5 | 2,1 | 2,0 | 4,0 |
| 11 | 2,09 | 32,1 | 67,0 | -4,3 | 4,1 | 45,3 | -3,5 | -6,7 | -2,9 | 3,5 | 1,6 | 2,4 |
| 12 | 2,02 | 32,0 | 64,5 | -4,5 | 3,9 | 48,0 | -4,0 | -6,8 | -0,8 | 5,8 | 2,0 | 2,5 |
| 13 | 2,06 | 32,9 | 67,8 | -4,5 | 2,5 | 43,2 | -3,9 | -3,5 | -0,4 | 6,5 | 2,0 | 2,2 |
| C1 | 1,94 | 29,2 | 56,6 | -6,4 | 1,7 | 49,0 | -2,7 | -4,1 | 0,4 | 3,0 | 1,8 | 1,5 |
| C2 | 2,03 | 34,9 | 70,9 | -4,6 | 2,1 | 38,9 | -1,6 | -3,1 | 1,9 | 3,9 | 2,5 | 0,9 |

**Revendications**

1. Substrat transparent portant un empilage multicouche de contrôle solaire comprenant trois couches fonctionnelles à base d'un matériau réfléchissant le rayonnement infrarouge et quatre revêtements diélectriques de telle sorte que chaque couche fonctionnelle soit entourée par des revêtements diélectriques, **caractérisé en ce que** l'épaisseur géométrique de la deuxième couche fonctionnelle en partant du substrat est comprise entre 13 et 15 nm et est supérieure à l'épaisseur géométrique de la première couche fonctionnelle et l'épaisseur géométrique de la troisième couche fonctionnelle est supérieure à l'épaisseur géométrique de la première couche fonctionnelle, **en ce que** le rapport de l'épaisseur optique du revêtement diélectrique transparent disposé entre la deuxième et la troisième couche fonctionnelle, en partant du substrat, sur l'épaisseur optique du revêtement diélectrique transparent final disposé au-delà de la dernière couche fonctionnelle est compris entre 2,0 et 3,0, et **en ce que** le rapport de l'épaisseur optique du revêtement diélectrique transparent disposé entre la deuxième et la troisième couche fonctionnelle sur l'épaisseur optique du revêtement diélectrique transparent disposé entre la première et la deuxième couche fonctionnelle est compris entre 0,6 et 0,9 et excluant d'une part un revêtement comprenant la succession suivante de couches en partant du substrat : une couche de nitrure de silicium dont l'épaisseur est comprise entre 8,4 et 14 nm ; une couche d'oxyde de zinc dont l'épaisseur est comprise entre 8,2 et 13,8 nm ; une première couche d'argent dont l'épaisseur est comprise entre 7,1 et 11,9 nm surmontée d'une couche barrière d'oxyde de nickel-chrome dont l'épaisseur est comprise entre 2,2 et 3,8 nm ; une couche d'oxyde de titane dont l'épaisseur est comprise entre 2,2 et 3,8 nm ; une couche d'oxyde de zinc-étain dont l'épaisseur est comprise entre 43,5 et 73 nm ; une couche d'oxyde de zinc dont l'épaisseur est comprise entre 12 et 20 nm ; une deuxième couche d'argent dont l'épaisseur est comprise entre 9,6 et 16 nm surmontée d'une couche barrière d'oxyde de nickel-chrome dont l'épaisseur est comprise entre 2,2 et 3,8 nm ; une couche de nitrure de silicium dont l'épaisseur est comprise entre 8,3 et 13,9 nm ; une couche d'oxyde d'étain dont l'épaisseur est comprise entre 27,7 et 46,3 nm ; une couche d'oxyde de zinc dont l'épaisseur est comprise entre 15 et 25 nm ; une troisième couche d'argent dont l'épaisseur est comprise entre 10 et 16,8 nm surmontée d'une couche barrière d'oxyde de nickel-chrome dont l'épaisseur est comprise entre 2,2 et 3,8 nm ; une couche d'oxyde d'étain dont l'épaisseur est comprise entre 11,2 et 18,8 nm ; une couche de nitrure de silicium dont l'épaisseur est comprise entre 12,8 et 21,4 nm et d'autre part un revêtement comprenant la succession suivante de couches en partant du substrat : un premier revêtement diélectrique formé d'une couche de stannate de zinc dont l'épaisseur est de 77,9 nm, une première couche d'argent dont l'épaisseur est 11,2 nm, une couche de titane dont l'épaisseur est 1 nm, une couche d'oxyde de titane dont l'épaisseur est 1,4 nm, un deuxième revêtement diélectrique composé de deux couches d'oxyde mixte de zinc étain dont l'épaisseur optique totale est 156,4 nm, la première couche d'oxyde mixte comprenant un rapport zinc/étain : 52/48 et le deuxième couche d'oxyde mixte du deuxième revêtement diélectrique ayant une épaisseur géométrique de 18,4 nm et comprenant un rapport zinc/étain : 90/10, une deuxième couche d'argent dont l'épaisseur est 14,3 nm, une couche de titane dont l'épaisseur est 0,8 nm, une couche d'oxyde de titane dont l'épaisseur est 1,4 nm, un troisième revêtement diélectrique composé de deux couches d'oxyde mixte de zinc étain dont l'épaisseur optique totale est 135,2 nm, la première couche d'oxyde mixte comprenant un rapport zinc/étain : 52/48 et le deuxième couche d'oxyde mixte du deuxième revêtement diélectrique ayant une épaisseur géométrique de 18,4 nm et comprenant un rapport zinc/étain : 90/10, une troisième couche d'argent dont l'épaisseur est 15,0 nm, une couche de titane dont l'épaisseur est 0,9 nm, une couche d'oxyde de titane dont l'épaisseur est 1,4 nm et un quatrième revêtement diélectrique composé de deux couches d'oxyde mixte de zinc étain dont l'épaisseur optique totale est 60,5 nm, la première couche d'oxyde mixte ayant une épaisseur géométrique de 9,2 nm et comprenant un rapport zinc/étain : 90/10 et le deuxième couche d'oxyde mixte du deuxième revêtement diélectrique comprenant un rapport zinc/étain : 52/48

2. Substrat transparent portant un empilage multicouche de contrôle solaire comprenant trois couches fonctionnelles à base d'un matériau réfléchissant le rayonnement infrarouge et quatre revêtements diélectriques de telle sorte que chaque couche fonctionnelle soit entourée par des revêtements diélectriques, **caractérisé en ce que** l'épaisseur géométrique de la deuxième couche fonctionnelle en partant du substrat est supérieure à l'épaisseur géométrique de la première couche fonctionnelle, **en ce que** l'épaisseur géométrique de la troisième couche fonctionnelle est comprise entre 16 et 20 nm et est supérieure à l'épaisseur géométrique de la première couche fonctionnelle, **en ce que** le rapport de l'épaisseur optique du revêtement diélectrique transparent disposé entre la deuxième et la troisième couche fonctionnelle, en partant du substrat, sur l'épaisseur optique du revêtement diélectrique transparent final disposé au-delà de la dernière couche fonctionnelle est compris entre 2,4 et 3,0, et **en ce que** le rapport de l'épaisseur optique du revêtement diélectrique transparent disposé entre la deuxième et la troisième couche fonctionnelle sur l'épaisseur optique du revêtement diélectrique transparent disposé entre la première et la deuxième couche fonctionnelle est compris entre 1,3 et 1,7.

3. Substrat transparent selon la revendication 1, **caractérisé en ce que** le rapport de l'épaisseur optique du revêtement diélectrique transparent disposé entre la deuxième et la troisième couche fonctionnelle, en partant du substrat, sur l'épaisseur optique du revêtement diélectrique transparent final disposé au-delà de la dernière couche fonctionnelle est compris entre 2,1 et 3,0, de préférence entre 2,1 et 2,7.

4. Substrat transparent selon la revendication 2, **caractérisé en ce que** le rapport de l'épaisseur optique du revêtement diélectrique transparent disposé entre la deuxième et la troisième couche fonctionnelle, en partant du substrat, sur l'épaisseur optique du revêtement diélectrique transparent final disposé au-delà de la dernière couche fonctionnelle est compris entre 2,4 et 3,0, de préférence entre 2,4 et 2,7.

5. Substrat transparent selon l'une quelconque l'une des revendications 1 ou 2, **caractérisé en ce que** la deuxième couche fonctionnelle en partant du substrat présente une épaisseur comprise entre 12 et 16 nm, de préférence entre 13 et 15nm, et **en ce que** l'épaisseur optique du premier diélectrique déposé sur le substrat est comprise entre 44 et 86 nm, et de préférence comprise entre 46 et 80 nm.

6. Substrat transparent selon la revendication 1, **caractérisé en ce que** le rapport de l'épaisseur optique du revêtement diélectrique transparent disposé entre la deuxième et la troisième couche fonctionnelle sur l'épaisseur optique du revêtement diélectrique transparent disposé entre la première et la deuxième couche fonctionnelle est compris entre 0,65 et 0,9, de préférence entre 0,7 et 0,85.

7. Substrat transparent selon l'une quelconque des revendications précédentes, **caractérisé en ce que** l'épaisseur géométrique de la première couche fonctionnelle en partant du substrat est comprise entre 9 et 14 nm, de préférence entre 10 et 13 nm, et avantageusement comprise entre 11 et 13 nm.

8. Substrat transparent selon l'une quelconque des revendications précédentes, **caractérisé en ce que** l'épaisseur géométrique de la dernière couche fonctionnelle en partant du substrat est comprise entre 11,5 et 17 nm, de préférence entre 13 et 16 nm.

9. Substrat transparent selon l'une quelconque des revendications précédentes, **caractérisé en ce que** l'épaisseur optique du second revêtement diélectrique transparent, disposé entre la première et la deuxième couche fonctionnelle, est comprise entre 138 et 170 nm, de préférence comprise entre 140 et 165 nm, et avantageusement comprise entre 148 et 160 nm.

10. Substrat transparent selon l'une quelconque des revendications précédentes, **caractérisé en ce que** l'épaisseur optique du troisième revêtement diélectrique transparent, disposé entre la deuxième et la troisième couche fonctionnelle, est comprise entre 101 et 155 nm, de préférence comprise entre 107 et 147 nm, et avantageusement comprise entre 117 et 147 nm.

11. Substrat transparent selon l'une quelconque des revendications précédentes, **caractérisé en ce que** l'épaisseur optique du revêtement diélectrique transparent final, disposé au-delà de la dernière couche fonctionnelle, est comprise entre 40 et 76 nm, de préférence comprise entre 44 et 71 nm, et avantageusement comprise entre 50 et 70 nm.

12. Substrat transparent selon l'une quelconque des revendications précédentes, **caractérisé en ce que** le rapport de l'épaisseur optique du premier revêtement diélectrique transparent, disposé entre le substrat et la première couche fonctionnelle en partant du substrat, sur l'épaisseur optique du revêtement diélectrique transparent final, disposé au-delà de la dernière couche fonctionnelle, est compris entre 0,5 et 1,7, de préférence entre 0,6 et 1,6, et avantageusement compris entre 0,9 et 1,5.

13. Substrat transparent selon l'une quelconque des revendications précédentes, **caractérisé en ce que** le rapport de l'épaisseur géométrique de la troisième couche fonctionnelle sur l'épaisseur géométrique de la seconde couche fonctionnelle en partant du substrat est compris entre 0,9 et 1,35, de préférence entre 1,0 et 1,2, et avantageusement compris entre 1,1 et 1,2.

14. Substrat transparent selon l'une quelconque des revendications précédentes, **caractérisé en ce que** le rapport de l'épaisseur optique du second revêtement diélectrique transparent, disposé entre la première et la deuxième couche fonctionnelle, sur l'épaisseur optique du premier revêtement diélectrique transparent, disposé entre le substrat et la première couche fonctionnelle en partant du substrat, est compris entre 1,6 et 3,8, de préférence entre 1,8 et 3,5, et avantageusement entre 2,0 et 3,0.

**15.** Substrat transparent selon la revendication 2, **caractérisé en ce que** le rapport de l'épaisseur optique du revêtement diélectrique transparent disposé entre la deuxième et la troisième couche fonctionnelle sur l'épaisseur optique du revêtement diélectrique transparent disposé entre la première et la deuxième couche fonctionnelle est compris entre 1,3 et 1,5, de préférence entre 1,3 et 1,4.

**16.** Substrat transparent selon la revendication 15, **caractérisé en ce que** le rapport de l'épaisseur optique du revêtement diélectrique transparent disposé entre la deuxième et la troisième couche fonctionnelle, en partant du substrat, sur l'épaisseur optique du revêtement diélectrique transparent final disposé au-delà de la dernière couche fonctionnelle est compris entre 2,4 et 2,7.

**17.** Substrat transparent selon l'une quelconque des revendications 15 à 16, **caractérisé en ce que** l'épaisseur géométrique de la première couche fonctionnelle en partant du substrat est comprise entre 8 et 12 nm, de préférence entre 9 et 11 nm, et avantageusement comprise entre 10 et 11 nm.

**18.** Substrat transparent selon l'une quelconque des revendications 15 à 17, **caractérisé en ce que** l'épaisseur géométrique de la dernière couche fonctionnelle en partant du substrat est comprise entre 16 et 20 nm, de préférence entre 17 et 19 nm, et avantageusement entre 18 et 19 nm.

**19.** Substrat transparent selon l'une quelconque des revendications 15 à 18, **caractérisé en ce que** l'épaisseur optique du second revêtement diélectrique transparent, disposé entre la première et la deuxième couche fonctionnelle, est comprise entre 105 et 150 nm, de préférence comprise entre 115 et 136 nm, et avantageusement comprise entre 119 et 132 nm.

**20.** Substrat transparent selon l'une quelconque des revendications 15 à 19, **caractérisé en ce que** l'épaisseur optique du troisième revêtement diélectrique transparent, disposé entre la deuxième et la troisième couche fonctionnelle, est comprise entre 152 et 175 nm, de préférence comprise entre 156 et 175 nm.

**21.** Substrat transparent selon l'une quelconque des revendications 15 à 20, **caractérisé en ce que** l'épaisseur optique du revêtement diélectrique transparent final, disposé au-delà de la dernière couche fonctionnelle, est comprise entre 58 et 82 nm, de préférence comprise entre 67 et 80 nm.

**22.** Substrat transparent selon l'une quelconque des revendications 15 à 21, **caractérisé en ce que** le rapport de l'épaisseur optique du premier revêtement diélectrique transparent, disposé entre le substrat et la première couche fonctionnelle en partant du substrat, sur l'épaisseur optique du revêtement diélectrique transparent final, disposé au-delà de la dernière couche fonctionnelle, est compris entre 0,5 et 1,2, de préférence entre 0,6 et 1,1.

**23.** Substrat transparent selon l'une quelconque des revendications 15 à 22, **caractérisé en ce que** le rapport de l'épaisseur géométrique de la troisième couche fonctionnelle sur l'épaisseur géométrique de la seconde couche fonctionnelle en partant du substrat est compris entre 1,1 et 1,8, de préférence entre 1,2 et 1,6.

**24.** Substrat transparent selon l'une quelconque des revendications 15 à 23, **caractérisé en ce que** le rapport de l'épaisseur optique du second revêtement diélectrique transparent, disposé entre la première et la deuxième couche fonctionnelle, sur l'épaisseur optique du premier revêtement diélectrique transparent, disposé entre le substrat et la première couche fonctionnelle en partant du substrat, est compris entre 1,5 et 2,6, de préférence entre 1,7 et 2,4.

**25.** Vitrage multiple comprenant au moins un substrat transparent selon l'une des revendications précédentes.

**26.** Vitrage multiple selon la revendication 25, **caractérisé en ce que**, lorsque l'empilage à contrôle solaire multicouche est déposé sur une feuille de verre float clair sodo-calcique ordinaire de 6 mm d'épaisseur qui est elle-même associée, à l'intervention d'un espace gazeux, à une feuille de verre float clair sodo-calcique ordinaire de 4 mm d'épaisseur, la transmission lumineuse $T_L$ est supérieure à 51%, avantageusement supérieure à 55% et de préférence supérieure ou égale à 60%.

**27.** Vitrage multiple selon l'une des revendications 25 ou 26, **caractérisé en ce que** le facteur solaire est égal ou inférieur à 34%, de préférence égal ou inférieur à 32%, et avantageusement égale ou inférieur à 30,5%.

**28.** Vitrage multiple selon l'une des revendications 25 à 27, **caractérisé en ce que** la sélectivité est supérieure à 1,95, de préférence égale ou supérieure à 2, et avantageusement égale ou supérieure à 2,05.

**29.** Vitrage feuilleté comprenant au moins un substrat transparent selon l'une des revendications 1 à 24 assemblé à une feuille de matière vitreuse à l'intervention d'une matière plastique adhésive.

**30.** Vitrage trempé portant un empilage antisolaire tel que défini dans les revendications 1 à 24 et ayant subi un traitement thermique de trempe et/ou de bombage à température élevée supérieure à 560°C.


**Patentansprüche**

**1.** Transparentes Substrat, welches einen mehrschichtigen Sonnenschutz-Schichtenstapel trägt, der drei funktionale Schichten auf der Basis eines die Infrarotstrahlung reflektierenden Materials und vier dielektrische Beschichtungen umfasst, derart, dass jede funktionale Schicht von dielektrischen Beschichtungen umgeben ist, **dadurch gekennzeichnet, dass** die geometrische Dicke der vom Substrat aus gesehen zweiten funktionalen Schicht zwischen 13 und 15 nm liegt und größer als die geometrische Dicke der ersten funktionalen Schicht ist und die geometrische Dicke der dritten funktionalen Schicht größer als die geometrische Dicke der ersten funktionalen Schicht ist, dadurch, dass das Verhältnis der optischen Dicke der transparenten dielektrischen Beschichtung, die, vom Substrat aus gesehen, zwischen der zweiten und der dritten funktionalen Schicht angeordnet ist, zur optischen Dicke der abschließenden transparenten dielektrischen Beschichtung, die jenseits der letzten funktionalen Schicht angeordnet ist, zwischen 2,0 und 3,0 liegt, und dadurch, dass das Verhältnis der optischen Dicke der transparenten dielektrischen Beschichtung, die zwischen der zweiten und der dritten funktionalen Schicht angeordnet ist, zur optischen Dicke der transparenten dielektrischen Beschichtung, die zwischen der ersten und der zweiten funktionalen Schicht angeordnet ist, zwischen 0,6 und 0,9 liegt, und ausgenommen einerseits eine Beschichtung, welche die folgende Aufeinanderfolge von Schichten umfasst, beginnend vom Substrat: eine Schicht Siliciumnitrid, deren Dicke zwischen 8,4 und 14 nm liegt; eine Schicht Zinkoxid, deren Dicke zwischen 8,2 und 13,8 nm liegt; eine erste Schicht Silber, deren Dicke zwischen 7,1 und 11,9 nm liegt, überlagert von einer Barriereschicht Nickel-Chrom-Oxid, deren Dicke zwischen 2,2 und 3,8 nm liegt; eine Schicht Titanoxid, deren Dicke zwischen 2,2 und 3,8 nm liegt; eine Schicht Zink-Zinn-Oxid, deren Dicke zwischen 43,5 und 73 nm liegt; eine Schicht Zinkoxid, deren Dicke zwischen 12 und 20 nm liegt; eine zweite Schicht Silber, deren Dicke zwischen 9,6 und 16 nm liegt, überlagert von einer Barriereschicht Nickel-Chrom-Oxid, deren Dicke zwischen 2,2 und 3,8 nm liegt; eine Schicht Siliciumnitrid, deren Dicke zwischen 8,3 und 13,9 nm liegt; eine Schicht Zinnoxid, deren Dicke zwischen 27,7 und 46,3 nm liegt; eine Schicht Zinkoxid, deren Dicke zwischen 15 und 25 nm liegt; eine dritte Schicht Silber, deren Dicke zwischen 10 und 16,8 nm liegt, überlagert von einer Barriereschicht Nickel-Chrom-Oxid, deren Dicke zwischen 2,2 und 3,8 nm liegt; eine Schicht Zinnoxid, deren Dicke zwischen 11,2 und 18,8 nm liegt; eine Schicht Siliciumnitrid, deren Dicke zwischen 12,8 und 21,4 nm liegt, und andererseits eine Beschichtung, welche die folgende Aufeinanderfolge von Schichten umfasst, beginnend vom Substrat: eine erste dielektrische Beschichtung, die von einer Schicht Zinkstannat gebildet wird, deren Dicke 77,9 nm beträgt, eine erste Schicht Silber, deren Dicke 11,2 nm beträgt, eine Schicht Titan, deren Dicke 1 nm beträgt, eine Schicht Titanoxid, deren Dicke 1,4 nm beträgt, eine zweite dielektrische Beschichtung, die aus zwei Schichten von gemischtem Oxid von Zink und Zinn besteht, deren optische Gesamtdicke 156,4 nm beträgt, wobei die erste gemischte Oxidschicht ein Verhältnis Zink/Zinn von 52/48 aufweist und die zweite gemischte Oxidschicht der zweiten dielektrischen Beschichtung eine geometrische Dicke von 18,4 nm aufweist und ein Verhältnis Zink/Zinn von 90/10 aufweist, eine zweite Schicht Silber, deren Dicke 14,3 nm beträgt, eine Schicht Titan, deren Dicke 0,8 nm beträgt, eine Schicht Titanoxid, deren Dicke 1,4 nm beträgt, eine dritte dielektrische Beschichtung, die aus zwei Schichten von gemischtem Oxid von Zink und Zinn besteht, deren optische Gesamtdicke 135,2 nm beträgt, wobei die erste gemischte Oxidschicht ein Verhältnis Zink/Zinn von 52/48 aufweist und die zweite gemischte Oxidschicht der zweiten dielektrischen Beschichtung eine geometrische Dicke von 18,4 nm aufweist und ein Verhältnis Zink/Zinn von 90/10 aufweist, eine dritte Schicht Silber, deren Dicke 15,0 nm beträgt, eine Schicht Titan, deren Dicke 0,9 nm beträgt, eine Schicht Titanoxid, deren Dicke 1,4 nm beträgt, und eine vierte dielektrische Beschichtung, die aus zwei Schichten von gemischtem Oxid von Zink und Zinn besteht, deren optische Gesamtdicke 60,5 nm beträgt, wobei die erste gemischte Oxidschicht eine geometrische Dicke von 9,2 nm aufweist und ein Verhältnis Zink/Zinn von 90/10 aufweist und zweite gemischte Oxidschicht der zweiten dielektrischen Beschichtung ein Verhältnis Zink/Zinn von 52/48 aufweist.

**2.** Transparentes Substrat, welches einen mehrschichtigen Sonnenschutz-Schichtenstapel trägt, der drei funktionale Schichten auf der Basis eines die Infrarotstrahlung reflektierenden Materials und vier dielektrische Beschichtungen umfasst, derart, dass jede funktionale Schicht von dielektrischen Beschichtungen umgeben ist, **dadurch gekennzeichnet, dass** die geometrische Dicke der vom Substrat aus gesehen zweiten funktionalen Schicht größer als die geometrische Dicke der ersten funktionalen Schicht ist, dadurch, dass die geometrische Dicke der dritten funktionalen Schicht zwischen 16 und 20 nm liegt und größer als die geometrische Dicke der ersten funktionalen Schicht ist, dadurch, dass das Verhältnis der optischen Dicke der transparenten dielektrischen Beschichtung, die, vom Substrat aus gesehen, zwischen der zweiten und der dritten funktionalen Schicht angeordnet ist, zur optischen Dicke der abschließenden transparenten dielektrischen Beschichtung, die jenseits der letzten funktionalen Schicht angeordnet ist, zwischen 2,4 und 3,0 liegt, und dadurch, dass das Verhältnis der optischen Dicke der transparenten dielektrischen Beschichtung, die zwischen der zweiten und der dritten funktionalen Schicht angeordnet ist, zur optischen Dicke der transparenten dielektrischen Beschichtung, die zwischen der ersten und der zweiten funktionalen Schicht angeordnet ist, zwischen 1,3 und 1,7 liegt.

3. Transparentes Substrat nach Anspruch 1, **dadurch gekennzeichnet, dass** das Verhältnis der optischen Dicke der transparenten dielektrischen Beschichtung, die, vom Substrat aus gesehen, zwischen der zweiten und der dritten funktionalen Schicht angeordnet ist, zur optischen Dicke der abschließenden transparenten dielektrischen Beschichtung, die jenseits der letzten funktionalen Schicht angeordnet ist, zwischen 2,1 und 3,0, vorzugsweise zwischen 2,1 und 2,7 liegt.

4. Transparentes Substrat nach Anspruch 2, **dadurch gekennzeichnet, dass** das Verhältnis der optischen Dicke der transparenten dielektrischen Beschichtung, die, vom Substrat aus gesehen, zwischen der zweiten und der dritten funktionalen Schicht angeordnet ist, zur optischen Dicke der abschließenden transparenten dielektrischen Beschichtung, die jenseits der letzten funktionalen Schicht angeordnet ist, zwischen 2,4 und 3,0, vorzugsweise zwischen 2,4 und 2,7 liegt.

5. Transparentes Substrat nach einem der Ansprüche 1 oder 2, **dadurch gekennzeichnet, dass** die vom Substrat aus gesehen zweite funktionale Schicht eine Dicke zwischen 12 und 16 nm vorzugsweise zwischen 13 und 15 nm aufweist, und dadurch, dass die optische Dicke des ersten auf das Substrat aufgebrachten Dielektrikums zwischen 44 und 86 nm liegt und vorzugsweise zwischen 46 und 80 nm liegt.

6. Transparentes Substrat nach Anspruch 1, **dadurch gekennzeichnet, dass** das Verhältnis der optischen Dicke der transparenten dielektrischen Beschichtung, die zwischen der zweiten und der dritten funktionalen Schicht angeordnet ist, zur optischen Dicke der transparenten dielektrischen Beschichtung, die zwischen der ersten und der zweiten funktionalen Schicht angeordnet ist, zwischen 0,65 und 0,9 liegt, vorzugsweise zwischen 0,7 und 0,85.

7. Transparentes Substrat nach einem der vorhergehenden Ansprüche, **dadurch gekennzeichnet, dass** die geometrische Dicke der vom Substrat aus gesehen ersten funktionalen Schicht zwischen 9 und 14 nm liegt, vorzugsweise zwischen 10 und 13 nm und vorteilhafterweise zwischen 11 und 13 nm liegt.

8. Transparentes Substrat nach einem der vorhergehenden Ansprüche, **dadurch gekennzeichnet, dass** die geometrische Dicke der vom Substrat aus gesehen letzten funktionalen Schicht zwischen 11,5 und 17 nm liegt, vorzugsweise zwischen 13 und 16 nm.

9. Transparentes Substrat nach einem der vorhergehenden Ansprüche, **dadurch gekennzeichnet, dass** die optische Dicke der zweiten transparenten dielektrischen Beschichtung, die zwischen der ersten und der zweiten funktionalen Schicht angeordnet ist, zwischen 138 und 170 nm liegt, vorzugsweise zwischen 140 und 165 nm liegt und vorteilhafterweise zwischen 148 und 160 nm liegt.

10. Transparentes Substrat nach einem der vorhergehenden Ansprüche, **dadurch gekennzeichnet, dass** die optische Dicke der dritten transparenten dielektrischen Beschichtung, die zwischen der zweiten und der dritten funktionalen Schicht angeordnet ist, zwischen 101 und 155 nm liegt, vorzugsweise zwischen 107 und 147 nm liegt und vorteilhafterweise zwischen 117 und 147 nm liegt.

11. Transparentes Substrat nach einem der vorhergehenden Ansprüche, **dadurch gekennzeichnet, dass** die optische Dicke der abschließenden transparenten dielektrischen Beschichtung, die jenseits der letzten funktionalen Schicht angeordnet ist, zwischen 40 und 76 nm liegt, vorzugsweise zwischen 44 und 71 nm liegt und vorteilhafterweise zwischen 50 und 70 nm liegt.

12. Transparentes Substrat nach einem der vorhergehenden Ansprüche, **dadurch gekennzeichnet, dass** das Verhältnis der optischen Dicke der ersten transparenten dielektrischen Beschichtung, die zwischen dem Substrat und der vom Substrat aus gesehen ersten funktionalen Schicht angeordnet ist, zur optischen Dicke der abschließenden transparenten dielektrischen Beschichtung, die jenseits der letzten funktionalen Schicht angeordnet ist, zwischen 0,5 und 1,7 liegt, vorzugsweise zwischen 0,6 und 1,6 und vorteilhafterweise zwischen 0,9 und 1,5 liegt.

**13.** Transparentes Substrat nach einem der vorhergehenden Ansprüche, **dadurch gekennzeichnet, dass** das Verhältnis der geometrischen Dicke der vom Substrat aus gesehen dritten funktionalen Schicht zur geometrischen Dicke der zweiten funktionalen Schicht zwischen 0,9 und 1,35 liegt, vorzugsweise zwischen 1,0 und 1,2 und vorteilhafterweise zwischen 1,1 und 1,2 liegt.

**14.** Transparentes Substrat nach einem der vorhergehenden Ansprüche, **dadurch gekennzeichnet, dass** das Verhältnis der optischen Dicke der zweiten transparenten dielektrischen Beschichtung, die zwischen der ersten und der zweiten funktionalen Schicht angeordnet ist, zur optischen Dicke der ersten transparenten dielektrischen Beschichtung, die zwischen dem Substrat und der vom Substrat aus gesehen ersten funktionalen Schicht angeordnet ist, zwischen 1,6 und 3,8 liegt, vorzugsweise zwischen 1,8 und 3,5 und vorteilhafterweise zwischen 2,0 und 3,0.

**15.** Transparentes Substrat nach Anspruch 2, **dadurch gekennzeichnet, dass** das Verhältnis der optischen Dicke der transparenten dielektrischen Beschichtung, die zwischen der zweiten und der dritten funktionalen Schicht angeordnet ist, zur optischen Dicke der transparenten dielektrischen Beschichtung, die zwischen der ersten und der zweiten funktionalen Schicht angeordnet ist, zwischen 1,3 und 1,5 liegt, vorzugsweise zwischen 1,3 und 1,4.

**16.** Transparentes Substrat nach Anspruch 15, **dadurch gekennzeichnet, dass** das Verhältnis der optischen Dicke der transparenten dielektrischen Beschichtung, die, vom Substrat aus gesehen, zwischen der zweiten und der dritten funktionalen Schicht angeordnet ist, zur optischen Dicke der abschließenden transparenten dielektrischen Beschichtung, die jenseits der letzten funktionalen Schicht angeordnet ist, zwischen 2,4 und 2,7 liegt.

**17.** Transparentes Substrat nach einem der Ansprüche 15 bis 16, **dadurch gekennzeichnet, dass** die geometrische Dicke der vom Substrat aus gesehen ersten funktionalen Schicht zwischen 8 und 12 nm liegt, vorzugsweise zwischen 9 und 11 nm und vorteilhafterweise zwischen 10 und 11 nm liegt.

**18.** Transparentes Substrat nach einem der Ansprüche 15 bis 17, **dadurch gekennzeichnet, dass** die geometrische Dicke der vom Substrat aus gesehen letzten funktionalen Schicht zwischen 16 und 20 nm liegt, vorzugsweise zwischen 17 und 19 nm und vorteilhafterweise zwischen 18 und 19 nm.

**19.** Transparentes Substrat nach einem der Ansprüche 15 bis 18, **dadurch gekennzeichnet, dass** die optische Dicke der zweiten transparenten dielektrischen Beschichtung, die zwischen der ersten und der zweiten funktionalen Schicht angeordnet ist, zwischen 105 und 150 nm liegt, vorzugsweise zwischen 115 und 136 nm liegt und vorteilhafterweise zwischen 119 und 132 nm liegt.

**20.** Transparentes Substrat nach einem der Ansprüche 15 bis 19, **dadurch gekennzeichnet, dass** die optische Dicke der dritten transparenten dielektrischen Beschichtung, die zwischen der zweiten und der dritten funktionalen Schicht angeordnet ist, zwischen 152 und 175 nm liegt, vorzugsweise zwischen 156 und 175 nm liegt.

**21.** Transparentes Substrat nach einem der Ansprüche 15 bis 20, **dadurch gekennzeichnet, dass** die optische Dicke der abschließenden transparenten dielektrischen Beschichtung, die jenseits der letzten funktionalen Schicht angeordnet ist, zwischen 58 und 82 nm liegt, vorzugsweise zwischen 67 und 80 nm liegt.

**22.** Transparentes Substrat nach einem der Ansprüche 15 bis 21, **dadurch gekennzeichnet, dass** das Verhältnis der optischen Dicke der ersten transparenten dielektrischen Beschichtung, die zwischen dem Substrat und der vom Substrat aus gesehen ersten funktionalen Schicht angeordnet ist, zur optischen Dicke der abschließenden transparenten dielektrischen Beschichtung, die jenseits der letzten funktionalen Schicht angeordnet ist, zwischen 0,5 und 1,2 liegt, vorzugsweise zwischen 0,6 und 1,1.

**23.** Transparentes Substrat nach einem der Ansprüche 15 bis 22, **dadurch gekennzeichnet, dass** das Verhältnis der geometrischen Dicke der vom Substrat aus gesehen dritten funktionalen Schicht zur geometrischen Dicke der zweiten funktionalen Schicht zwischen 1,1 und 1,8 liegt, vorzugsweise zwischen 1,2 und 1,6.

**24.** Transparentes Substrat nach einem der Ansprüche 15 bis 23, **dadurch gekennzeichnet, dass** das Verhältnis der optischen Dicke der zweiten transparenten dielektrischen Beschichtung, die zwischen der ersten und der zweiten funktionalen Schicht angeordnet ist, zur optischen Dicke der ersten transparenten dielektrischen Beschichtung, die zwischen dem Substrat und der vom Substrat aus gesehen ersten funktionalen Schicht angeordnet ist, zwischen 1,5 und 2,6 liegt, vorzugsweise zwischen 1,7 und 2,4.

25. Mehrfachverglasung, welche wenigstens ein transparentes Substrat nach einem der vorhergehenden Ansprüche umfasst.

26. Mehrfachverglasung nach Anspruch 25, **dadurch gekennzeichnet, dass**, wenn der mehrschichtige Sonnenschutz-Schichtenstapel auf eine Scheibe aus gewöhnlichem klarem Kalk-Natron-Floatglas von 6 mm Dicke aufgebracht ist, welche ihrerseits, mittels eines Gasraumes, mit einer Scheibe aus gewöhnlichem klarem Kalk-Natron-Floatglas von 4 mm Dicke gekoppelt ist, die Lichtdurchlässigkeit $T_L$ größer als 51 %, vorteilhafterweise größer als 55 % und vorzugsweise größer oder gleich 60 % ist.

27. Mehrfachverglasung nach einem der Ansprüche 25 oder 26, **dadurch gekennzeichnet, dass** der Gesamtenergiedurchlassgrad kleiner oder gleich 34 %, vorzugsweise kleiner oder gleich 32 % und vorteilhafterweise kleiner oder gleich 30,5 % ist.

28. Mehrfachverglasung nach einem der Ansprüche 25 bis 27, **dadurch gekennzeichnet, dass** die Selektivität größer oder gleich 1,95, vorzugsweise größer oder gleich 2 und vorteilhafterweise größer oder gleich 2,05 ist.

29. Verbundglasscheibe, welche wenigstens ein transparentes Substrat nach einem der Ansprüche 1 bis 24 umfasst, das mittels eines adhäsiven Kunststoffs mit einer Scheibe aus Glasmaterial verbunden ist.

30. Vorgespannte Verglasung, welche einen Sonnenschutz-Schichtenstapel trägt, wie in den Ansprüchen 1 bis 24 definiert, und einer Wärmebehandlung zum Vorspannen und/oder Biegen bei einer hohen Temperatur, die höher als 560 °C ist, unterzogen wurde.

**Claims**

1. Transparent substrate bearing a multilayer solar-control stack comprising three functional layers based on a material reflecting infrared radiation and four dielectric coatings such that each functional layer is surrounded by dielectric coatings, **characterized in that** the geometrical thickness of the second functional layer starting from the substrate is between 13 and 15 nm and is greater than the geometrical thickness of the first functional layer and the geometrical thickness of the third functional layer is greater than the geometrical thickness of the first functional layer, **in that** the ratio of the optical thickness of the transparent dielectric coating disposed between the second and the third functional layers, starting from the substrate, to the optical thickness of the final transparent dielectric coating disposed on top of the last functional layer is between 2.0 and 3.0, and **in that** the ratio of the optical thickness of the transparent dielectric coating disposed between the second and the third functional layers to the optical thickness of the transparent dielectric coating disposed between the first and the second functional layers is between 0.6 and 0.9 and excluding, on the one hand, a coating comprising the following succession of layers starting from the substrate: a layer of silicon nitride whose thickness is between 8.4 and 14 nm; a layer of zinc oxide whose thickness is between 8.2 and 13.8 nm; a first layer of silver whose thickness is between 7.1 and 11.9 nm topped by a barrier layer of nickel-chromium oxide whose thickness is between 2.2 and 3.8 nm; a layer of titanium oxide whose thickness is between 2.2 and 3.8 nm; a layer of zinc-tin oxide whose thickness is between 43.5 and 73 nm; a layer of zinc oxide whose thickness is between 12 and 20 nm; a second layer of silver whose thickness is between 9.6 and 16 nm topped by a barrier layer of nickel-chromium oxide whose thickness is between 2.2 and 3.8 nm; a layer of silicon nitride whose thickness is between 8.3 and 13.9 nm; a layer of tin oxide whose thickness is between 27.7 and 46.3 nm; a layer of zinc oxide whose thickness is between 15 and 25 nm; a third layer of silver whose thickness is between 10 and 16.8 nm topped by a barrier layer of nickel-chromium oxide whose thickness is between 2.2 and 3.8 nm; a layer of tin oxide whose thickness is between 11.2 and 18.8 nm; a layer of silicon nitride whose thickness is between 12.8 and 21.4 nm and, on the other hand, a coating comprising the following succession of layers starting from the substrate: a first dielectric coating formed by a layer of zinc stannate whose thickness is 77.9 nm, a first layer of silver whose thickness is 11.2 nm, a layer of titanium whose thickness is 1 nm, a layer of titanium oxide whose thickness is 1.4 nm, a second dielectric coating composed of two layers of mixed zinc-tin oxide whose total optical thickness is 156.4 nm, the first layer of mixed oxide comprising a zinc/tin ratio: 52/48 and the second layer of mixed oxide of the second dielectric coating having a geometrical thickness of 18.4 nm and comprising a zinc/tin ratio: 90/10, a second layer of silver whose thickness is 14.3 nm, a layer of titanium whose thickness is 0.8 nm, a layer of titanium oxide whose thickness is 1.4 nm, a third dielectric coating composed of two layers of mixed zinc-tin oxide whose total optical thickness is 135.2 nm, the first layer of mixed oxide comprising a zinc/tin ratio: 52/48 and the second layer of mixed oxide of the second dielectric coating having a geometrical thickness of 18.4 nm and comprising a zinc/tin ratio: 90/10, a third layer of silver whose thickness is 15.0 nm, a layer of titanium whose thickness is 0.9 nm, a layer of titanium oxide whose thickness is 1.4 nm and a fourth dielectric coating composed of two layers of mixed zinc-tin oxide whose total optical thickness is 60.5 nm, the first layer of mixed oxide having a geometrical thickness of 9.2 nm and comprising a zinc/tin ratio: 90/10 and the second layer of mixed oxide of the second dielectric coating comprising a zinc/tin ratio: 52/48.

2. Transparent substrate bearing a multilayer solar-control stack comprising three functional layers based on a material reflecting infrared radiation and four dielectric coatings such that each functional layer is surrounded by dielectric coatings, **characterized in that** the geometrical thickness of the second functional layer starting from the substrate is greater than the geometrical thickness of the first functional layer, **in that** the geometrical thickness of the third functional layer is between 16 and 20 nm and is greater than the geometrical thickness of the first functional layer, **in that** the ratio of the optical thickness of the transparent dielectric coating disposed between the second and the third functional layers, starting from the substrate, to the optical thickness of the final transparent dielectric coating disposed on top of the last functional layer is between 2.4 and 3.0, and **in that** the ratio of the optical thickness of the transparent dielectric coating disposed between the second and the third functional layers to the optical thickness of the transparent dielectric coating disposed between the first and the second functional layers is between 1.3 and 1.7.

3. Transparent substrate according to Claim 1, **characterized in that** the ratio of the optical thickness of the transparent dielectric coating disposed between the second and the third functional layers, starting from the substrate, to the optical thickness of the final transparent dielectric coating disposed on top of the last functional layer is between 2.1 and 3.0, preferably between 2.1 and 2.7.

4. Transparent substrate according to Claim 2, **characterized in that** the ratio of the optical thickness of the transparent dielectric coating disposed between the second and the third functional layers, starting from the substrate, to the optical thickness of the final transparent dielectric coating disposed on top of the last functional layer is between 2.4 and 3.0, preferably between 2.4 and 2.7.

5. Transparent substrate according to either one of Claims 1 and 2, **characterized in that** the second functional layer starting from the substrate has a thickness of between 12 and 16 nm, preferably between 13 and 15 nm, and **in that** the optical thickness of the first dielectric deposited on the substrate is between 44 and 86 nm, and preferably between 46 and 80 nm.

6. Transparent substrate according to Claim 1, **characterized in that** the ratio of the optical thickness of the transparent dielectric coating disposed between the second and the third functional layers to the optical thickness of the transparent dielectric coating disposed between the first and the second functional layers is between 0.65 and 0.9, preferably between 0.7 and 0.85.

7. Transparent substrate according to any one of the preceding claims, **characterized in that** the geometrical thickness of the first functional layer starting from the substrate is between 9 and 14 nm, preferably between 10 and 13 nm, and advantageously between 11 and 13 nm.

8. Transparent substrate according to any one of the preceding claims, **characterized in that** the geometrical thickness of the last functional layer starting from the substrate is between 11.5 and 17 nm, preferably between 13 and 16 nm.

9. Transparent substrate according to any one of the preceding claims, **characterized in that** the optical thickness of the second transparent dielectric coating, disposed between the first and the second functional layers, is between 138 and 170 nm, preferably between 140 and 165 nm, and advantageously between 148 and 160 nm.

10. Transparent substrate according to any one of the preceding claims, **characterized in that** the optical thickness of the third transparent dielectric coating, disposed between the second and the third functional layers, is between 101 and 155 nm, preferably between 107 and 147 nm, and advantageously between 117 and 147 nm.

11. Transparent substrate according to any one of the preceding claims, **characterized in that** the optical thickness of the final transparent dielectric coating, disposed on top of the last functional layer, is between 40 and 76 nm, preferably between 44 and 71 nm, and advantageously between 50 and 70 nm.

12. Transparent substrate according to any one of the preceding claims, **characterized in that** the ratio of the optical thickness of the first transparent dielectric coating, disposed between the substrate and the first functional layer starting from the substrate, to the optical thickness of the final transparent dielectric coating, disposed on top of the last functional layer, is between 0.5 and 1.7, preferably between 0.6 and 1.6, and advantageously between 0.9 and 1.5.

13. Transparent substrate according to any one of the preceding claims, **characterized in that** the ratio of the geometrical thickness of the third functional layer to the geometrical thickness of the second functional layer starting from the substrate is between 0.9 and 1.35, preferably between 1.0 and 1.2, and advantageously between 1.1 and 1.2.

14. Transparent substrate according to any one of the preceding claims, **characterized in that** the ratio of the optical thickness of the second transparent dielectric coating, disposed between the first and the second functional layers, to the optical thickness of the first transparent dielectric coating, disposed between the substrate and the first functional layer starting from the substrate, is between 1.6 and 3.8, preferably between 1.8 and 3.5, and advantageously between 2.0 and 3.0.

15. Transparent substrate according to Claim 2, **characterized in that** the ratio of the optical thickness of the transparent dielectric coating disposed between the second and the third functional layers to the optical thickness of the transparent dielectric coating disposed between the first and the second functional layers is between 1.3 and 1.5, preferably between 1.3 and 1.4.

16. Transparent substrate according to Claim 15, **characterized in that** the ratio of the optical thickness of the transparent dielectric coating disposed between the second and the third functional layers, starting from the substrate, to the optical thickness of the final transparent dielectric coating disposed on top of the last functional layer is between 2.4 and 2.7.

17. Transparent substrate according to either one of Claims 15 and 16, **characterized in that** the geometrical thickness of the first functional layer starting from the substrate is between 8 and 12 nm, preferably between 9 and 11 nm, and advantageously between 10 and 11 nm.

18. Transparent substrate according to any one of Claims 15 to 17, **characterized in that** the geometrical thickness of the last functional layer starting from the substrate is between 16 and 20 nm, preferably between 17 and 19 nm, and advantageously between 18 and 19 nm.

19. Transparent substrate according to any one of Claims 15 to 18, **characterized in that** the optical thickness of the second transparent dielectric coating, disposed between the first and the second functional layers, is between 105 and 150 nm, preferably between 115 and 136 nm, and advantageously between 119 and 132 nm.

20. Transparent substrate according to any one of Claims 15 to 19, **characterized in that** the optical thickness of the third transparent dielectric coating, disposed between the second and the third functional layers, is between 152 and 175 nm, preferably between 156 and 175 nm.

21. Transparent substrate according to any one of Claims 15 to 20, **characterized in that** the optical thickness of the final transparent dielectric coating, disposed on top of the last functional layer, is between 58 and 82 nm, preferably between 67 and 80 nm.

22. Transparent substrate according to any one of Claims 15 to 21, **characterized in that** the ratio of the optical thickness of the first transparent dielectric coating, disposed between the substrate and the first functional layer starting from the substrate, to the optical thickness of the final transparent dielectric coating, disposed on top of the last functional layer, is between 0.5 and 1.2, preferably between 0.6 and 1.1.

23. Transparent substrate according to any one of Claims 15 to 22, **characterized in that** the ratio of the geometrical thickness of the third functional layer to the geometrical thickness of the second functional layer starting from the substrate is between 1.1 and 1.8, preferably between 1.2 and 1.6.

24. Transparent substrate according to any one of Claims 15 to 23, **characterized in that** the ratio of the optical thickness of the second transparent dielectric coating, disposed between the first and the second functional layers, to the optical thickness of the first transparent dielectric coating, disposed between the substrate and the first functional layer starting from the substrate, is between 1.5 and 2.6, preferably between 1.7 and 2.4.

25. Multiple glazing unit comprising at least one transparent substrate according to one of the preceding claims.

26. Multiple glazing unit according to Claim 25, **characterized in that**, when the multilayer solar-control stack is deposited on an ordinary sheet of clear soda-lime float glass 6 mm thick which is itself associated, with the intervention of a gaseous space, with an ordinary sheet of clear soda-lime float glass 4 mm thick, the light transmission $T_L$ is greater than 51%, advantageously greater than 55% and preferably greater than or equal to 60%.

27. Multiple glazing unit according to one of Claims 25 and 26, **characterized in that** the solar factor is equal to or less than 34%, preferably equal to or less than 32%, and advantageously equal to or less than 30.5%.

28. Multiple glazing unit according to one of Claims 25 to 27, **characterized in that** the selectivity is greater than 1.95, preferably equal to or greater than 2, and advantageously equal to or greater than 2.05.

29. Laminated glazing unit comprising at least one transparent substrate according to one of Claims 1 to 24 assembled with a sheet of vitreous material with the intervention of an adhesive plastic material.

30. Tempered glazing unit bearing an antisolar stack as defined in Claims 1 to 24 and having undergone a tempering and/or bending heat treatment at a high temperature greater than 560°C.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009029466 A1
- EP 645352 A1
- WO 2010037968 A1
- WO 2012115850 A1
- WO 2011147864 A1
- EP 2011058540 W
- EP 645352 A